(19) Europäisches Patentamt
European Patent Office
Office européen des brevets

(11) **EP 3 410 245 A1**

(12) **EUROPEAN PATENT APPLICATION**

(43) Date of publication:
**05.12.2018 Bulletin 2018/49**

(51) Int Cl.:
***G05B 23/02*** *(2006.01)*     ***G05B 19/418*** *(2006.01)*

(21) Application number: **18171798.4**

(22) Date of filing: **11.05.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.06.2017 JP 2017110153**
            **14.03.2018 JP 2018046755**

(71) Applicant: **OMRON Corporation**
**Shiokoji-dori, Shimogyo-ku**
**Kyoto-shi**
**Kyoto 600-8530 (JP)**

(72) Inventors:
• **OTA, Yuya**
  **Kyoto-shi, Kyoto 600-8530 (JP)**

• **TSURUTA, Kosuke**
  **Kyoto-shi, Kyoto 600-8530 (JP)**
• **KAWANOUE, Shinsuke**
  **Kyoto-shi, Kyoto 600-8530 (JP)**
• **SHIRAMIZU, Gaku**
  **Kyoto-shi, Kyoto 600-8530 (JP)**
• **ABE, Yasuaki**
  **Kyoto-shi, Kyoto 600-8530 (JP)**
• **NAKAJIMA, Akira**
  **Kyoto-shi, Kyoto 600-8530 (JP)**
• **MINEMOTO, Toshifumi**
  **Kyoto-shi, Kyoto 600-8530 (JP)**
• **HIROHASHI, Yuki**
  **Kyoto-shi, Kyoto 600-8530 (JP)**
• **HATTORI, Reiko**
  **Kyoto-shi, Kyoto 600-8530 (JP)**

(74) Representative: **Horn Kleimann Waitzhofer**
**Patentanwälte PartG mbB**
**Ganghoferstrasse 29a**
**80339 München (DE)**

(54) **PROCESS ANALYSIS APPARATUS, PROCESS ANALYSIS METHOD, AND PROCESS ANALYSIS PROGRAM**

(57)    Provided is a technique for accurately modelling a causal relationship between a plurality of mechanisms that constitute a manufacturing line. A process analysis apparatus according to an aspect of the invention include a first acquisition unit that acquires a plurality of pieces of state data related to states of a plurality of mechanisms that constitute a manufacturing line, a second acquisition unit that acquires a control program for controlling an operation of the manufacturing line, a first analyzer that analyzes the acquired plurality of pieces of state data so as to identify a connection state between the plurality of mechanisms, a second analyzer that analyzes the acquired control program so as to identify an order relationship between the plurality of mechanisms, and a relationship identifying unit that identifies a causal relationship between the plurality of mechanisms in a process that is carried out on the manufacturing line, based on the identified connection state and order relationship.

FIG. 1

**Description**

CROSS-REFERENCES TO RELATED APPLICATION

This application claims priority to Japanese Patent Application No. 2017-110153 filed June 2, 2017 and No. 2018-046755 filed March 14, 2018, the entire contents of which are incorporated herein by reference.

FIELD

The present invention relates to a process analysis apparatus, a process analysis method, and a process analysis program.

BACKGROUND

Manufacturing lines in factories and the like are constituted by a plurality of mechanisms such as a conveyor and a robot arm. If an abnormality occurs in one mechanism on a manufacturing line, there is a possibility that manufacturing of products will stop, and a large amount of damage is caused. Therefore, in factories and the like, maintenance staff periodically patrol around a manufacturing line to check whether or not an abnormality has occurred or there is a sign thereof.

When the occurrence of an abnormality or a sign thereof is detected on a manufacturing line, there are cases where the true cause of the abnormality was in a mechanism that comes before a mechanism in which the abnormality was detected. Therefore, it is important to understand the causal relationship between the mechanisms on the manufacturing line in order to identify the true cause of the abnormality. However, since the number of mechanisms that constitute a manufacturing line has increased, and operation conditions of the mechanisms can change every day, it is difficult to accurately understand the causal relationship regarding all of the mechanisms.

Therefore, conventionally, experienced maintenance staff performed detection of an abnormality that has occurred in a manufacturing line or a sign thereof by understanding the causal relationship between a plurality of mechanisms that constitute the manufacturing line, based on his or her experience and intuition. There have been demands for development of a technique for visualizing the causal relationship between a plurality of mechanisms that constitute a manufacturing line such that non-experienced maintenance staff can perform such maintenance work.

In view of this, Patent Document 1 proposes a method for modelling the relationship between a plurality of manufacturing apparatuses within a manufacturing line, by analyzing signals that are exchanged between a control apparatus and manufacturing apparatuses. Specifically, feature amounts are calculated from a plurality of signals that are acquired, and the order in which the plurality of signals were generated is extracted. A causal structure between the signals is then generated based on the correlation between the feature amounts and the order in which signals were generated. Accordingly, in the method proposed in Patent Document 1, it is possible to model the relationship between manufacturing apparatuses in a manufacturing line.

JP 2009-064407A is an example of background art.

According to the above method of Patent Document 1, it is possible to automatically model the causal relationship between a plurality of mechanisms constituting a manufacturing line. However, the manufacturing line repeats the same operation, and thus it is possible to identify the relative order relationship between the mechanisms from the order in which signals were generated, but it was difficult to identify which signal (mechanism) was the origin of an operation. For example, in the case where a manufacturing line has three mechanisms, namely a mechanism A1, a mechanism A2, and a mechanism A3, which are operating in the stated order, it was difficult to identify that the mechanism A1 is the origin of the operation, in a conventional method. Therefore, in the method of Patent Document 1, there is a possibility that a wrong signal is taken as the signal acting as the origin of an operation, and the causal relationship between a plurality of mechanisms cannot be accurately modelled.

In one aspect, the invention has been made in view of such an issue, and aims to provide a technique for accurately modelling the causal relationship between a plurality of mechanisms constituting a manufacturing line.

SUMMARY

The invention adopts the following configuration in order to solve the above-described issue.

Accordingly, a process analysis apparatus according to an aspect of the invention includes a first acquisition unit that acquires a plurality of pieces of state data related to states of a plurality of mechanisms that constitute a manufacturing line, a second acquisition unit that acquires a control program for controlling an operation of the manufacturing line, a first analyzer that analyzes the acquired plurality of pieces of state data so as to identify a connection state between the plurality of mechanisms, a second analyzer that analyzes the acquired control program so as to identify an order relationship between the plurality of mechanisms, and a relationship identifying unit that identifies a causal relationship between the plurality of mechanisms in a process that is carried out on the manufacturing line, based on the identified connection state and order relationship.

In the above-described configuration, the connection state between a plurality of mechanisms constituting a manufacturing line is identified based on a plurality of pieces of state data related to the states of the mechanisms. In addition, the order relationship between the mechanisms is identified based on a control program for controlling the manufacturing line. The causal relationship between the mechanisms in a process that is carried out on the manufacturing line is then identified by integrating the identified connection state and order relationship. Here, a control program prescribes operations of the mechanisms. Therefore, by using the control program, it is possible to appropriately identify the order relationship between the mechanisms. Therefore, according to the above configuration, it is possible to accurately model the causal relationship between a plurality of mechanisms constituting a manufacturing line.

Note that it suffices for the manufacturing line to be able to manufacture certain products, and the manufacturing line may be constituted by a plurality of apparatuses, or may be constituted by one apparatus such as a packing device. Also, it suffices for each of the mechanisms to be able to carry out certain processing of a manufacturing process. Each mechanism may be a conveyor, a robot arm, a servo motor, a cylinder (e.g., a molding device), a suction pad, a cutter apparatus, a sealing apparatus, or the like. Also, each mechanism may be a composite apparatus of a printer, a mounting device, a reflow furnace, a substrate inspection apparatus, and the like. Furthermore, the mechanisms may include an apparatus that detects certain information using various types of sensors, an apparatus that acquires data from various types of sensors, an apparatus that detects certain information from acquired data, and an apparatus that performs internal processing such as an apparatus that performs information processing on acquired data, and the like, in addition to an apparatus that involves a certain physical operation as described above. One mechanism may be constituted by one or more apparatuses, or may be constituted by a portion of an apparatus. In the case where one mechanism is constituted by a portion of an apparatus, a plurality of mechanisms may be constituted by the apparatus. Moreover, in the case where the same apparatus carries out different types of processing, the different types of processing may be regarded as separate mechanisms. For example, in the case where the same apparatus carries out first processing and second processing, the apparatus that performs the first processing may be regarded as a first mechanism, and the apparatus that performs the second processing may be regarded as a second mechanism.

The state data may include any type of data related to the states of the mechanisms that constitute the manufacturing line. The state data may be constituted by data that is acquired from a measurement apparatus such as one or more sensors or a camera. The state data may also be data that is acquired from a measurement apparatus without any change, or may be data that is acquired by applying certain processing to data acquired from a measurement apparatus, such as positional data that is acquired from image data.

The control program may include any type of program for controlling operations of the mechanisms that constitute the manufacturing line. The control program may be constituted by one program, or may be constituted by a plurality of programs.

As long as the connection between a plurality of mechanisms can be indicated, a method for expressing a connection state does not need to be particularly limited, and may be determined as appropriate according to an embodiment. A connection state may be expressed by the strength of a relationship (e.g., a correlation coefficient that indicates correlation relationship), the presence or absence of relationship, a change in the relationship, or the like. Note that a change in the relationship may be indicated by a difference (change amount) in relationship in time series that is expressed by the strength of the relationship or the presence or absence of a relationship, for example.

In the process analysis apparatus according to the above aspect, the relationship identifying unit may output directed graph information indicating the identified causal relationship between the plurality of mechanisms. According to the configuration, even a non-experienced maintenance staff can easily understand the causal relationship between a plurality of mechanisms constituting a manufacturing line, using directed graph information that is output.

In the process analysis apparatus according to the above aspect, the first analyzer may construct non-directed graph information indicating the identified connection state between the plurality of mechanisms, and the relationship identifying unit may create the directed graph information by applying the order relationship to the non-directed graph information. According to the configuration, it is possible to appropriately create directed graph information indicating the causal relationship between a plurality of mechanisms.

In the process analysis apparatus according to the above aspect, the first analyzer may identify a connection state between the plurality of mechanisms by (1) calculating feature amounts from the plurality of pieces of state data, and (2) calculating a correlation coefficient or a partial correlation coefficient between the feature amounts. According to the configuration, it is possible to appropriately identify the connection state between a plurality of mechanisms.

In the process analysis apparatus according to the above aspect, the second analyzer may identify an order relationship between the plurality of mechanisms based on log data that is acquired by operating the manufacturing line using the control program. According to the configuration, it is possible to appropriately identify the order relationship between a plurality of mechanisms.

In the process analysis apparatus according to the above aspect, the second analyzer may identify an order relationship between the plurality of mechanisms by (1) constructing an abstract syntax tree from the control program, (2) extracting variables and conditional branches for the respective mechanisms from the constructed abstract syntax tree, (3) acquiring log data while the manufacturing line is operated normally using the control program, and (4) performing ordering of the variables that is based on a result of executing the conditional branches, by referencing the acquired log data. According to the configuration, it is possible to appropriately identify the order relationship between a plurality of mechanisms.

In the process analysis apparatus according to the above aspect, the second analyzer may (1) construct an abstract syntax tree from the control program, (2) extract variables for the respective mechanisms from the constructed abstract syntax tree, (3) identify a dependency relationship between the variables in processing of the control program, based on the constructed abstract syntax tree, and (4) identify an order relationship between the plurality of mechanisms based on the identified dependency relationship. According to the configuration, it is possible to appropriately identify the order relationship between a plurality of mechanisms.

In the process analysis apparatus according to the above aspect, the above step (3) for identifying a dependency relationship between the variables in processing of the control program based on the constructed abstract syntax tree may include a step for generating a control flow graph from the constructed abstract syntax tree, and a step for identifying a dependency relationship between the extracted variables based on the generated control flow graph. According to the configuration, it is possible to appropriately identify the order relationship between a plurality of mechanisms.

In the process analysis apparatus according to the above aspect, each piece of the state data may be data indicating at least one of torque, speed, acceleration, temperature, current, voltage, air pressure, pressure, flow rate, position, size (height, length, or width) and area. In addition, the control program can be written using at least one of a ladder diagram language, a function block diagram language, a structured text language, an instruction list language, a sequential function chart language, and a C language. According to the configuration, it is possible to provide a process analysis apparatus that can handle various types of data and programs.

In the process analysis apparatus according to the above aspect, the first analyzer may identify the connection state between the plurality of mechanisms by statistically analyzing the acquired plurality of pieces of state data. According to the configuration, it is possible to appropriately identify the connection state between a plurality of mechanisms.

In the process analysis apparatus according to the above aspect, the first analyzer may identify, as the connection state, a strength of a relationship between the plurality of mechanisms. According to the configuration, it is possible to appropriately identify the connection state between a plurality of mechanisms.

The process analysis apparatus according to the above aspect may further include a third acquisition unit that acquires mechanism data for at least one of a relative positional relationship between apparatuses included in the respective mechanisms and an order of the apparatuses involved in the process, and a third analyzer that identifies a process model indicating an order relationship between the plurality of mechanisms by analyzing the acquired mechanism data, and modelling the process that is carried out on the manufacturing line. Additionally, the relationship identifying unit may identify a causal relationship between the plurality of mechanisms in a process that is carried out on the manufacturing line, based on the identified connection state, order relationship, and process model. According to the configuration, by further using the knowledge of an identified process model, it is possible to more accurately model the causal relationship between a plurality of mechanisms constituting a manufacturing line.

Note that, as another mode of the process analysis apparatus according to any one of the above aspects, an information processing method or program that realizes the above configurations may be adopted, or a storage medium that stores such a program, and can be read by a computer, an apparatus or device other than a computer, or the like may be adopted. Here, such a computer-readable recording medium is a medium that accumulates information such as a program through an electric, magnetic, optical, mechanical, or chemical action.

For example, a process analysis method according to an aspect of the invention is an information processing method in which a computer executes acquiring a plurality of pieces of state data related to states of a plurality of mechanisms that constitute a manufacturing line, acquiring a control program for controlling an operation of the manufacturing line, analysing the acquired plurality of pieces of state data so as to identify a connection state between the plurality of mechanisms, analysing the acquired control program so as to identify an order relationship between the plurality of mechanisms, and identifying a causal relationship between the plurality of mechanisms in a process that is carried out on the manufacturing line, based on the identified connection state and order relationship.

In addition, for example, a process analysis program according to an aspect of the invention is a program for causing a computer to execute acquiring a plurality of pieces of state data related to states of a plurality of mechanisms that constitute a manufacturing line, acquiring a control program for controlling an operation of the manufacturing line, analysing the acquired plurality of pieces of state data so as to identify a connection state between the plurality of mechanisms, analysing the acquired control program so as to identify an order relationship between the plurality of mechanisms, and identifying a causal relationship between the plurality of mechanisms in a process that is carried out on the manufacturing line, based on the identified connection state and order relationship.

According to the invention, it is possible to accurately model the causal relationship between a plurality of mechanisms that constitute a manufacturing line.

BRIEF DESCRIPTION OF THE DRAWINGS

Fig. 1 schematically illustrates an example of a case where a process analysis apparatus according to an embodiment of the invention is applied.
Fig. 2 schematically illustrates an example of the hardware configuration of a process analysis apparatus according to an embodiment of the invention.
Fig. 3 schematically illustrates an example of the hardware configuration of a control apparatus (PLC) according to an embodiment of the invention.
Fig. 4 schematically illustrates an example of the software configuration of a process analysis apparatus according to an embodiment of the invention.
Fig. 5 illustrates an example of a processing procedure of a process analysis apparatus according to an embodiment of the invention.
Fig. 6 illustrates an example of a processing procedure when a process analysis apparatus according to an embodiment of the invention analyzes state data.
Fig. 7 illustrates an example of a stage of analyzing state data.
Fig. 8 illustrates the relationship between a control signal and tact time.
Fig. 9 illustrates an example of a processing procedure when analyzing a control program of a process analysis apparatus according to an embodiment.
Fig. 10 illustrates an example of an abstract syntax tree that is constructed from a control program.
Fig. 11A illustrates an example of an instance where ordering of variables is initialized.
Fig. 11B illustrates an example of an order relationship between a plurality of mechanisms that is identified by analyzing a control program.
Fig. 12 illustrates an example of directed graph information indicating the correlation relationship between a plurality of mechanisms.
Fig. 13A shows an exemplary operation of a manufacturing line according to a working example.
Fig. 13B shows an exemplary operation of a manufacturing line according to a working example.
Fig. 13C shows an exemplary operation of a manufacturing line according to a working example.
Fig. 14 shows some feature amounts acquired in a working example.
Fig. 15 shows a correlation coefficient matrix calculated from the feature amounts in Fig. 14.
Fig. 16 shows non-directed graph information acquired from the correlation coefficient matrix in Fig. 15.
Fig. 17 shows a portion of a control program used in a working example.
Fig. 18A shows an abstract syntax tree that is constructed from the control program in Fig. 17.
Fig. 18B shows an abstract syntax tree that is constructed from the control program in Fig. 17.
Fig. 18C shows an abstract syntax tree that is constructed from the control program in Fig. 17.
Fig. 18D shows an abstract syntax tree that is constructed from the control program in Fig. 17.
Fig. 19 shows the order relationship between variables acquired in a working example.
Fig. 20 shows directed graph information acquired in a working example.
Fig. 21 is a flowchart showing an example of a processing procedure for analyzing a control program.
Fig. 22 schematically illustrates an example of a control flow graph.
Fig. 23 is a flowchart showing an example of a processing procedure for identifying the dependency relationship between variables based on a control flow graph.
Fig. 24A schematically illustrates an example of variable groups that are acquired.
Fig. 24B schematically illustrates the dependency relationship between variables in pairs of variable groups.
Fig. 24C schematically illustrates an example of the order relationship between a plurality of mechanisms that has been identified based on the dependency relationship between variables.
Fig. 25 schematically illustrates an example of the software configuration of a process analysis apparatus according to a modified example.
Fig. 26 illustrates an example of a stage for analyzing mechanism data.

DETAILED DESCRIPTION

An embodiment according to an aspect of the invention (hereinafter, also referred to as "this embodiment") will be described below with reference to the drawings. However, this embodiment to be described below is merely an example of the invention in all respects. It is needless to say that various modifications and deformations can be made without departing from the scope of the invention. Accordingly, in carrying out the invention, a specific configuration that is based on an embodiment may be adopted as appropriate. Note that data that is used in this embodiment is described in a natural language, but, more specifically, the data is specified in a computer recognizable quasi-language, commands, parameters, a machine language or the like.

§1. Application Example

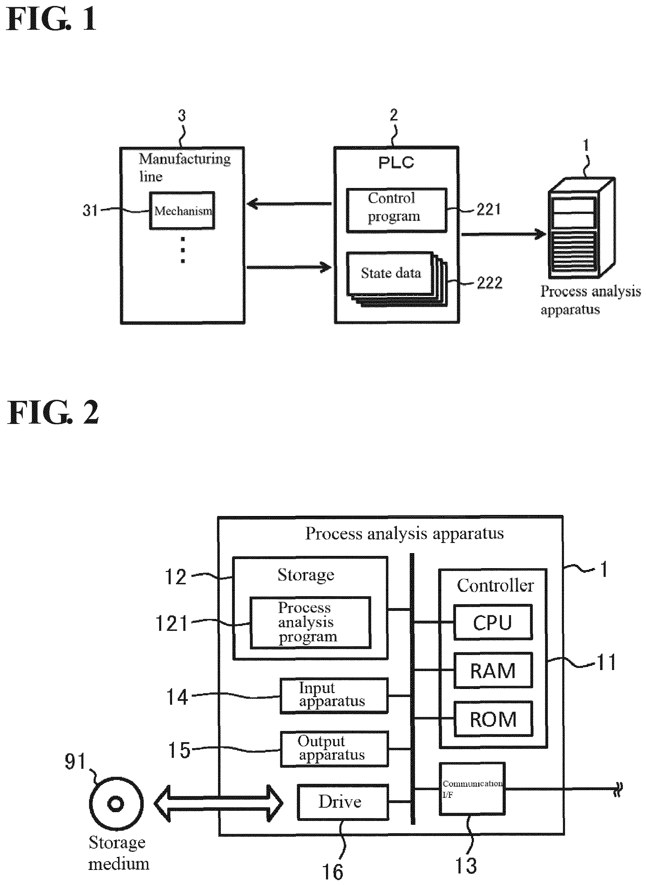

First, an example of a case where the invention is applied will be described with reference to Fig. 1. Fig. 1 schematically illustrates an example of a case of using a process analysis apparatus 1 according to this embodiment.

As shown in Fig. 1, the process analysis apparatus 1 according to this embodiment acquires a plurality of pieces of state data 222 related to the states of a plurality of mechanisms 31 that constitute a manufacturing line 3. It suffices for the manufacturing line 3 to be able to manufacture certain products, and the manufacturing line 3 may be constituted by a plurality of apparatuses, or may be constituted by one apparatus such as a packing device. Also, it suffices for each of the mechanisms 31 to be able to carry out certain processing of a manufacturing process, and each of the mechanisms 31 may be constituted by one or more apparatuses, or may be constituted by a portion of an apparatus. In the case where one of the mechanisms 31 is constituted by a portion of an apparatus, the plurality of mechanisms 31 may be constituted by a single apparatus. In addition, in the case where the same apparatus carries out a plurality of processes, the plurality of processes may be respectively regarded as separate mechanisms 31. For example, in the case where the same apparatus carries out first processing and second processing, the apparatus that performs the first processing may be regarded as a first mechanism 31, and the apparatus that performs the second processing may be regarded as a second mechanism 31. Furthermore, the state data 222 may include any type of data related to the states of the respective mechanisms 31 constituting the manufacturing line 3.

In addition, the process analysis apparatus 1 according to this embodiment acquires a control program 221 for controlling an operation of the manufacturing line 3. The control program 221 may include any type of program for controlling operations of the mechanisms 31 constituting the manufacturing line 3. The control program 221 may be constituted by one program, or may be constituted by a plurality of programs. Note that, in this embodiment, the operations of the manufacturing line 3 are controlled by a PLC (Programmable Logic Controller) 2. Therefore, the process analysis apparatus 1 acquires a plurality of pieces of state data 222 and the control program 221 from the PLC 2.

Next, the process analysis apparatus 1 according to this embodiment identifies the strength of the relationship between the plurality of mechanisms 31 in the manufacturing line 3 by statistically analyzing the plurality of pieces of state data 222 that have been acquired. The strength of the relationship is an example of a "connection state" of the invention. The process analysis apparatus 1 according to this embodiment also identifies the order relationship of the plurality of mechanisms 31 in the manufacturing line 3 by analyzing the acquired control program 221. The process analysis apparatus 1 according to this embodiment then identifies the causal relationship between the plurality of mechanisms 31 in a process that is performed on the manufacturing line 3, based on the strength of the relationship and the order relationship that have been identified.

As described above, in this embodiment, the control program 221 is used in order to identify the order relationship between the plurality of mechanisms 31 in a stage for analyzing the causal relationship between the plurality of mechanisms 31. The control program 221 prescribes the operations of the mechanisms 31, and thus it is possible to more accurately identify the order relationship between the mechanisms 31 by using the control program 221. Therefore, according to this embodiment, it is possible to accurately model the causal relationship between the plurality of mechanisms 31 that constitute the manufacturing line 3.

§2 Configuration Example

Hardware

Process Analysis Apparatus

Next, an example of the hardware configuration of the process analysis apparatus 1 according to this embodiment will be described with reference to Fig. 2. Fig. 2 schematically illustrates an example of the hardware configuration of the process analysis apparatus 1 according to this embodiment.

As shown in Fig. 2, the process analysis apparatus 1 according to this embodiment is a computer to which a controller 11, a storage 12, a communication interface 13, an input apparatus 14, an output apparatus 15, and a drive 16 are electrically connected. Note that, in Fig. 2, the communications interface is indicated as a "communication I/F".

The controller 11 includes a CPU (Central Processing Unit) that is a hardware processor, a RAM (Random Access Memory), a ROM (Read Only Memory), and the like, and controls constituent elements according to information processing. The storage 12 is an auxiliary storage device such as a hard disk drive, a solid-state drive, or the like, and stores a process analysis program 121 that is executed by the controller 11, and the like.

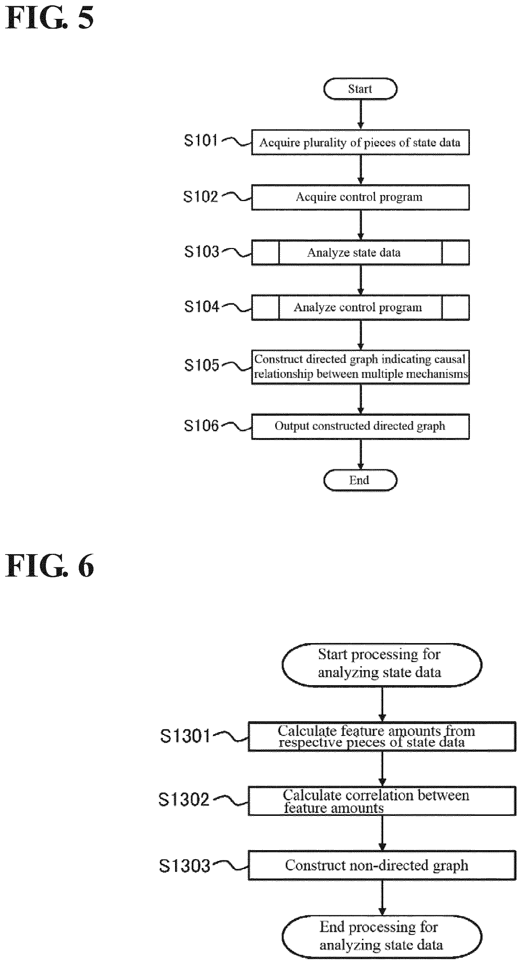

The process analysis program 121 is a program for causing the process analysis apparatus 1 to execute processing (Fig. 5) for analysing, using the plurality of pieces of state data 222 and the control program 221, the causal relationship between the plurality of mechanisms 31 in a manufacturing process that is carried out on the manufacturing line 3, the processing of which will be described later. Detailed description thereof will be given later.

The communication interface 13 is a wired LAN (Local Area Network) module, a wireless LAN module, or the like, and is an interface for performing wired or wireless communication via a network. The process analysis apparatus 1 can perform data communication with the PLC 2 via a network using this communication interface 13. Note that the type of network may be selected from the Internet, a wireless communication network, a mobile communication network, a telephone network, a dedicated network, and the like as appropriate.

The input apparatus 14 is an apparatus for performing input, such as a mouse or a keyboard. In addition, the output apparatus 15 is an apparatus for performing output, such as a display or a speaker. An operator can operate the process analysis apparatus 1 via the input apparatus 14 and the output apparatus 15.

The drive 16 is a CD drive, a DVD drive, or the like, and is a drive apparatus for reading a program stored in a storage medium 91. The type of the drive 16 may be selected as appropriate according to the type of the storage medium 91. The above process analysis program 121 may be stored in this storage medium 91.

The storage medium 91 is a medium for accumulating information such as a program through an electric, magnetic, optical, mechanical, or chemical action, such that a computer, an apparatus or device other than a computer, or the like can read stored information such as a program. The process analysis apparatus 1 may acquire the above process analysis program 121 from this storage medium 91.

Here, Fig. 2 illustrates a disk-type storage medium such as a CD or a DVD as an example of the storage medium 91. However, the type of the storage medium 91 is not limited to a disk, and may be a type other than a disk. A semiconductor memory such as a flash memory can be used as a storage medium that is not a disk, for example.

Note that, regarding a specific hardware configuration of the process analysis apparatus 1, constituent elements can be omitted, replaced and added as appropriate according to an embodiment. For example, the controller 11 may include a plurality of processors. The process analysis apparatus 1 may be constituted by a plurality of information processing apparatuses. Also, the process analysis apparatus 1 may be a general-purpose server apparatus, a PC (Personal Computer), or the like, other than an information processing apparatus designed only for a provided service.

PLC

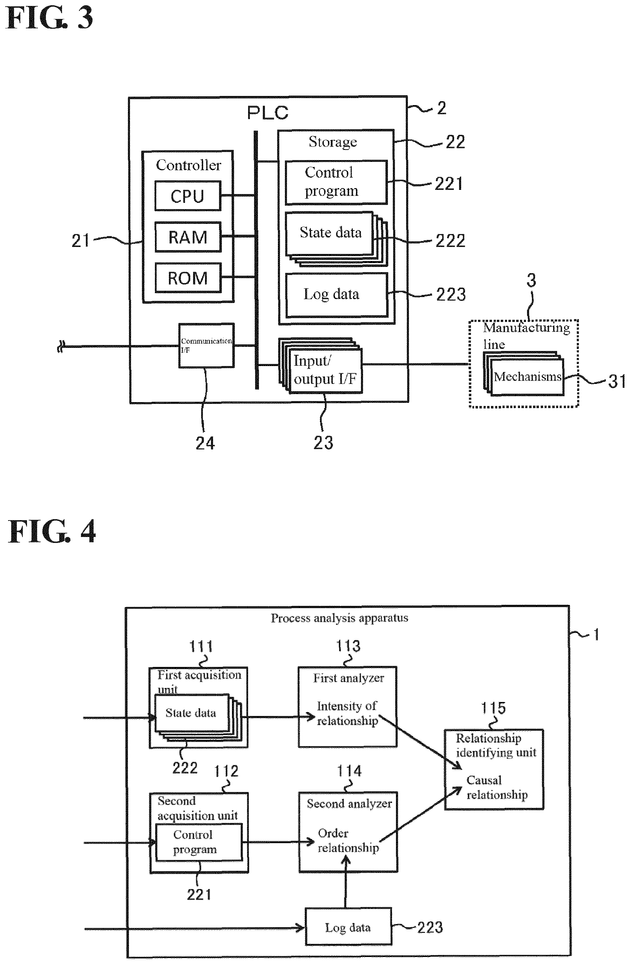

Next, an example of the hardware configuration of the PLC 2 for controlling the operations of the manufacturing line 3 will be described with reference to Fig. 3. Fig. 3 schematically illustrates an example of the hardware configuration of the PLC 2 according to this embodiment.

As shown in Fig. 3, the PLC 2 is a computer to which a controller 21, a storage 22, input/output interfaces 23, and a communications interface 24 are electrically connected. Accordingly, the PLC 2 is configured to control the operations of the mechanisms 31 of the manufacturing line 3. Note that, in Fig. 3, the input/output interfaces and the communication interface are indicated as "input/output I/F" and a "communication I/F", respectively.

The controller 21 includes a CPU, a RAM, a ROM, and the like, and is configured to execute various types of information processing based on programs and data. The storage 22 is constituted by a RAM, a ROM, and the like, and stores the control program 221, the state data 222, log data 223, and the like. The control program 221 is a program for controlling the operations of the manufacturing line 3. The state data 222 is data related to the states of the mechanisms 31. The log data 223 is log data indicating the operation of the manufacturing line 3.

Each of the input/output interfaces 23 is an interface for connecting to an external apparatus, and is configured as appropriate according to an external apparatus that is connected thereto. In this embodiment, the PLC 2 is connected to the manufacturing line 3 via the input/output interfaces 23. Note that, in the case where different pieces of state data can be acquired regarding a single apparatus, the single apparatus of interest may be regarded as plurality of mechanisms 31, or may be regarded as a single mechanism 31. Therefore, the number of input/output interfaces 23 may be the same as the number of mechanisms 31 that constitute the manufacturing line 3, or may be different from the number of mechanisms 31 that constitute the manufacturing line 3.

The communications interface 24 is a wired LAN module, a wireless LAN module, or the like, and is an interface for performing wired or wireless communication. The PLC 2 can perform data communication with the process analysis apparatus 1 using the communications interface 24.

Note that, regarding a specific hardware configuration of the PLC 2, constituent elements can be omitted, replaced, and added as appropriate according to an embodiment. For example, the controller 21 may include a plurality of processors. The storage 22 may be constituted by the RAM and ROM included in the controller 21. The storage 22 may be constituted by an auxiliary storage device such as a hard disk drive or a solid-state drive. In addition, the PLC 2 may be replaced with a general-purpose desktop PC, a tablet PC, or the like, other than an information processing apparatus designed only for a provided service, according to a target to be controlled.

Software Configuration

Next, an example of the software configuration of the process analysis apparatus 1 according to this embodiment will be described with reference to Fig. 4. Fig. 4 schematically illustrates an example of the software configuration of the process analysis apparatus 1 according to this embodiment.

The controller 11 of the process analysis apparatus 1 deploys the process analysis program 121 stored in the storage 12 to the RAM. The controller 11 then causes the CPU to interpret and execute the process analysis program 121 deployed in the RAM, so as to control each constituent element. Accordingly, as shown in Fig. 4, the process analysis apparatus 1 according to this embodiment is configured as a computer that includes a first acquisition unit 111, a second acquisition unit 112, a first analyzer 113, a second analyzer 114, and a relationship identifying unit 115 as software modules.

The first acquisition unit 111 acquires a plurality of pieces of state data 222 related to the states of the plurality of mechanisms 31 constituting the manufacturing line 3. The second acquisition unit 112 acquires the control program 221 for controlling the operations of the manufacturing line 3. The first analyzer 113 identifies the strength of the relationship between the plurality of mechanisms 31 by statistically analyzing the plurality of pieces of state data 222 that have been acquired. The second analyzer 114 identifies the order relationship of the plurality of mechanisms 31 by analyzing the acquired control program 221. In this embodiment, the second analyzer 114 identifies the order relationship between the plurality of mechanisms 31 using the log data 223 that is acquired by executing the control program 221. The relationship identifying unit 115 then identifies the causal relationship between the plurality of mechanisms 31 in a process that is carried out on the manufacturing line 3, based on the strength of the relationship and the order relationship that have been identified.

Software modules of the process analysis apparatus 1 will be described in detail regarding exemplary operations that will be described later. Note that, in this embodiment, an example is described in which the software modules of the process analysis apparatus 1 are all realized by a general-purpose CPU. However, some or all of the following software modules may be realized by one or more dedicated hardware processors. In addition, regarding the software configuration of the process analysis apparatus 1, software modules may be omitted, replaced, and added as appropriate according to an embodiment.

§3 Exemplary Operation

Next, an exemplary operation of the process analysis apparatus 1 will be described with reference to Fig. 5. Fig. 5 illustrates an example of a processing procedure of the process analysis apparatus 1. Note that the processing procedure of the process analysis apparatus 1, which will be described later, corresponds to a "process analysis method" of the invention. Note that the processing procedure that will be described later is merely an example, and processing may be changed wherever possible. In addition, regarding the processing procedure that will be described later, steps can be omitted, replaced, and added as appropriate according to an embodiment.

Step S101

First, in step S101, the controller 11 operates as the first acquisition unit 111, and acquires a plurality of pieces of state data 222 for the states of the mechanisms 31 from the PLC 2. Each of the mechanisms 31 may be constituted by an apparatus such as a conveyor, a robot arm, a servo motor, a cylinder (e.g., a molding device), a suction pad, a cutter apparatus, a sealing apparatus, or the like, or a portion thereof. Also, each mechanism 31 may be a composite apparatus of a printer, a mounting device, a reflow furnace, a substrate inspection apparatus, and the like. Furthermore, each mechanism 31 may include, for example, an apparatus that detects certain pieces of information using various types of sensors, an apparatus that acquires data from various types of sensors, an apparatus that detects certain pieces of information from acquired data, and an apparatus that performs internal processing such as an apparatus that performs information processing on acquired data, other than an apparatus that involves a certain physical operation as described above. As a specific example, on a manufacturing line having an optical sensor that detects a mark added to a target object flowing on a conveyor, the optical sensor and an apparatus that uses information detected by the optical sensor may be handled as a mechanism 31. In addition, each piece of the state data 222 may be data indicating at least one of torque, speed, acceleration, temperature, current, voltage, air pressure, pressure, flow rate, position, sizes (height, length, and width), and area, for example. The state data 222 as described above can be acquired using a measurement apparatus such as a known sensor or a camera. For example, a flow rate can be acquired using a float sensor. In addition, position, sizes, and area can be acquired using an image sensor.

Note that the state data 222 may be constituted by data that is acquired from one or more measurement apparatuses. In addition, the state data 222 may be data that is acquired from a measurement apparatus without any change, or may be data that can be acquired by applying certain processing to data acquired from a measurement apparatus, such as positional data that is acquired from image data. The pieces of state data 222 are acquired in correspondence with the respective mechanisms 31.

Measurement apparatuses are arranged as appropriate such that the mechanisms 31 of the manufacturing line 3 can be monitored. The PLC 2 operates the manufacturing line 3, and collects the pieces of state data 222 from the respective measurement apparatuses. The controller 11 acquires, from the PLC 2, the state data 222 related to the states of the mechanisms 31 when the manufacturing line 3 operates normally. Accordingly, the controller 11 can acquire the plurality of pieces of state data 222. When acquisition of the plurality of pieces of state data 222 is complete, the controller 11 advances the procedure to the next step S102.

Step S102

In the next step S102, the controller 11 operates as the second acquisition unit 112, and acquires the control program 221 from the PLC 2. The control program 22 may be written using at least one of a ladder diagram language, a function block diagrammatic language, a structured text language, an instruction list language, and a sequential function chart language, and a C language such that the PLC 2 can execute the control program 221. When acquisition of the control program 221 is complete, the controller 11 advances the procedure to the next step S103. Note that this step S102 may be executed in parallel with the above step S101, or may be executed before the above step S101.

Step S103

In the next step S103, the controller 11 identifies the strength of the relationship between the plurality of mechanisms 31 in the manufacturing line 3 by operating as the first analyzer 113, and statistically analyzing the plurality of pieces of state data 222 acquired in step S101. When the processing for analyzing the plurality of pieces of state data 222 is complete, the controller 11 advances the procedure to the next step S104. Note that this step S103 may be executed at any timing after the above step S101. For example, this step S103 may be executed before the above step S102.

Processing for Analyzing State Data

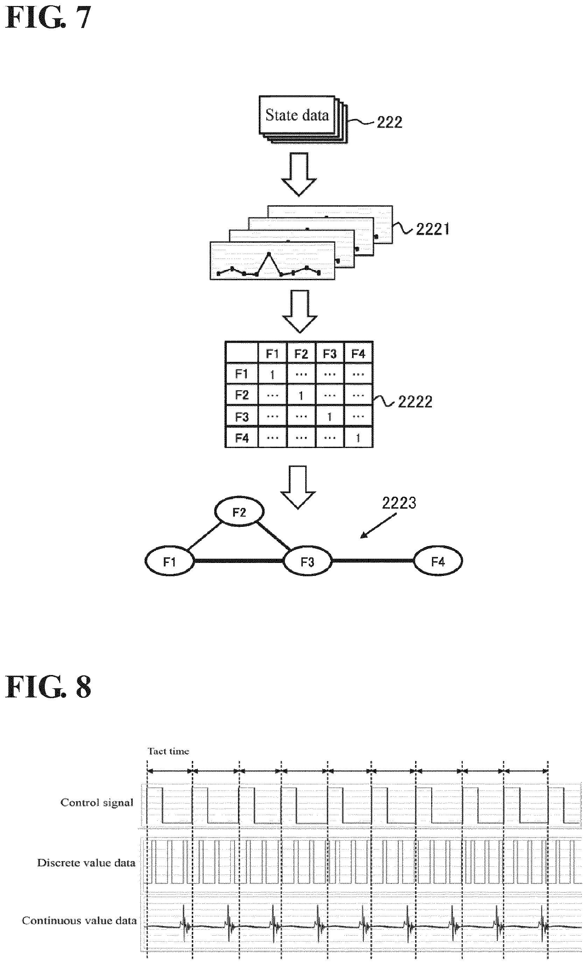

Here, processing for statistically analyzing the plurality of pieces of state data 222 will be described in detail with further reference to Figs. 6 and 7. Fig. 6 illustrates an example of a procedure of processing for analyzing the state data 222. Fig. 7 schematically illustrates an example of a stage for analyzing the state data 222 using a procedure shown in Fig. 6. In the following description, for convenience of description, assume that the manufacturing line 3 has four mechanisms (e.g., four servo motors) F1 to F4 as the plurality of mechanisms 31, and the controller 11 has acquired pieces of state data 222 of the respective mechanisms F1 to F4 in the above step S101.

Step S130

First, in step S1301, the controller 11 calculates feature amounts 2221 from the respective pieces of the state data 222 acquired in step S101. The type of feature amounts 2221 does not have to be limited particularly, and may be selected as appropriate according to an embodiment. Also, a method for calculating the feature amounts 2221 can be determined as appropriate according to an embodiment.

As a specific example, in this embodiment, the controller 11 calculates the feature amounts 2221 from the state data 222 using the following method. First, the controller 11 divides, by the frames, each piece of the state data 222 that has been acquired, in order to define processing ranges for calculating the feature amounts 2221. The lengths of the frames may be set as appropriate according to an embodiment.

The controller 11 may divide each piece of the state data 222 by the frames having a certain time length, for example. However, the manufacturing line 3 does not necessarily operate at certain time intervals. Therefore, if each piece of the state data 222 is divided by the frames having a certain time length, there is a possibility that operations of the mechanisms 31 that are reflected in the frames are deviated.

In view of this, the controller 11 may divide the state data 222 by the frames at every tact time. A tact time is the time required for the manufacturing line 3 to manufacture a predetermined number of products. This tact time can be identified based on a signal for controlling the manufacturing line 3, for example, a control signal used by the PLC 2 to control an operation of each of the mechanisms 31 of the manufacturing line 3.

The relationship between a control signal and a tact time will be described with reference to Fig. 8. Fig. 8 schematically illustrates the relationship between a control signal and a tact time. As shown in Fig. 8, a control signal for the manufacturing line 3 that repeats manufacturing of a product is a pulse signal that periodically indicates "on" and "off" according to a predetermined number of products being manufactured.

Therefore, the controller 11 acquires this control signal from the PLC 2, and a time from a rise ("on") of the acquired control signal to the next rise ("on") can be set as a tact time. The controller 11 can then divide the state data 222 by the frames for every tact time as illustrated in Fig. 8.

Next, the controller 11 calculates the value of a feature amount 2221 from each frame of the state data 222. In the case where the state data 222 is continuous value data such as measurement data, the controller 11 may calculate, for example, an amplitude, a maximum value, a minimum value, an average value, a variance value, a standard deviation, an instantaneous value (single sample), or the like within the frame, as a feature amount 2221. In addition, in the case where the state data 222 is discrete value data such as detection data, the controller 11 may calculate an "on" time, an "off" time, a Duty ratio, the number of times of "on", the number of times of "off", or the like within the frame, as a feature amount 2221. Accordingly, when calculation of the feature amounts 2221 is complete, the controller 11 advances the procedure to the next step S1302.

Step S1302

Returning to Figs. 6 and 7, in the next step S1302, the controller 11 calculates a correlation coefficient or partial correlation coefficient between the feature amounts 2221. A correlation coefficient can be calculated using Expression 1 below. Also, a partial correlation coefficient can be calculated using Expression 2 below.

[Expression 1]

$$ r_{ij} = \frac{\sum_{k=1}^{n}(x_i(k) - X_i)(x_j(k) - X_j)}{\sqrt{(\sum_{k=1}^{n}(x_i(k) - X_i)^2)(\sum_{k=1}^{n}(x_j(k) - X_j)^2)}} $$

Note that $r_{ij}$ indicates an element in an i-th row and a j-th column of a matrix 2222. $x_i$ and $x_j$ correspond to data indicating a feature amount 2221 calculated from each piece of the state data 222. $X_i$ and $X_j$ respectively indicate sample averages of $x_i$ and $x_j$. n indicates the number of feature amounts 2221 that are used for calculating the correlation.

[Expression 2]

$$ r_{ij \cdot rest} = \frac{-r^{ij}}{\sqrt{r^{ii}r^{jj}}} $$

Note that the inverse matrix of a matrix $R(r_{ij})$ is expressed as $R^{-1}(r^{ij})$, and $r^{ij}$ indicates an element in an i-th row and a j-th column of the inverse matrix of the matrix 2222.

Accordingly, the controller 11 can acquire the matrix 2222 having correlation coefficients or partial correlation coefficients as elements. The correlation coefficients and partial correlation coefficients between the feature amounts 2221 indicate the strength of the relationship between the corresponding mechanisms 31. Accordingly, elements of the matrix 2222 are used for identifying the strength of the relationship between the corresponding mechanisms 31. When calculation of the correlation coefficients or partial correlation coefficients between the feature amounts 2221 is complete, the controller 11 advances the procedure to the next step S1303.

Step S1303

In the next step S1303, the controller 11 constructs, based on the correlation coefficients or partial correlation coefficients between the feature amounts 2221, non-directed graph information 2223 indicating the strength of the relationship between the corresponding mechanisms 31.

For example, the controller 11 generates nodes corresponding to the mechanisms 31. Subsequently, in the case where the value of a correlation coefficient or partial correlation coefficient calculated for two mechanisms 31 is larger than or equal to a threshold value, the controller 11 couples the corresponding nodes using an edge. On the other hand, in the case where the value of a correlation coefficient or partial correlation coefficient calculated for two mechanisms 31 is smaller than the threshold value, the controller 11 does not couple the corresponding nodes using an edge. Note that the threshold value may be a fixed value defined within the process analysis program 121, or may be a setting value that can be changed by an operator or the like. In addition, the thickness of an edge may be determined according to the magnitude of the value of the corresponding correlation coefficient or partial correlation coefficient.

Accordingly, it is possible to create the non-directed graph information 2223 as illustrated in Fig. 7. In the example in Fig. 7, four nodes corresponding to the four mechanisms F1 to F4 are created. Additionally, edges are formed between the nodes of the mechanisms F1 and F2, the nodes of the mechanisms F1 and F3, the nodes of the mechanisms F2 and F3, and the nodes of the mechanisms F3 and F4. Moreover, the correlation between the mechanisms F1 and F3 and the correlation between the mechanisms F3 and F4 are larger than the other correlations, and correspondingly, the edge between the nodes of the mechanisms F1 and F3 and the edge between the nodes of the mechanisms F3 and F4 are formed to be thicker than the other edges. With the above configuration, when construction of the non-directed graph information 2223 indicating the strength of the relationship between the plurality of mechanisms 31 is complete, the processing for analyzing the state data 222 according to this embodiment is complete, and the controller 11 advances the procedure to the next step S104.

Note that, in the example of Fig. 7, in the non-directed graph information 2223, a formed non-directed graph is expressed as an image. However, the output format of the non-directed graph information 2223 does not need to be limited to an image, and the non-directed graph information 2223 may be expressed as text. In addition, in the above-described example, a configuration is adopted in which an edge is not formed between nodes (mechanisms 31) whose relationship is weak, according to comparison between a correlation coefficient or partial correlation coefficient and a threshold value. However, a method for removing an edge between nodes whose relationship is weak does not need to be limited to such an example. For example, after forming a graph in which all of the nodes are coupled using edges, the controller 11 may delete edges in a formed graph in order from an edge for the smallest correlation coefficient or partial correlation coefficient, such that an adaptability indicator (e.g., GFI or SRMR) that indicates the degree of deviation does not exceed a threshold value.

Step S104

Returning to Fig. 5, in the next step S104, the controller 11 identifies the order relationship between the plurality of mechanisms 31 in the manufacturing line 3 by operating as the second analyzer 114, and analyzing the control program 221 acquired in step S102. In this embodiment, the controller 11 identifies the order relationship between the plurality of mechanisms 31 based on the log data 223 that is acquired by operating the manufacturing line 3 using the control program 221. When the processing for analyzing the control program 221 is complete, the controller 11 advances the procedure to the next step S105. Note that this step S104 may be executed at any timing after the above step S102. For example, in the case where the above step S102 is executed before the above step S101, this step S104 may be executed before the above step S101.

Processing for Analyzing Control Program

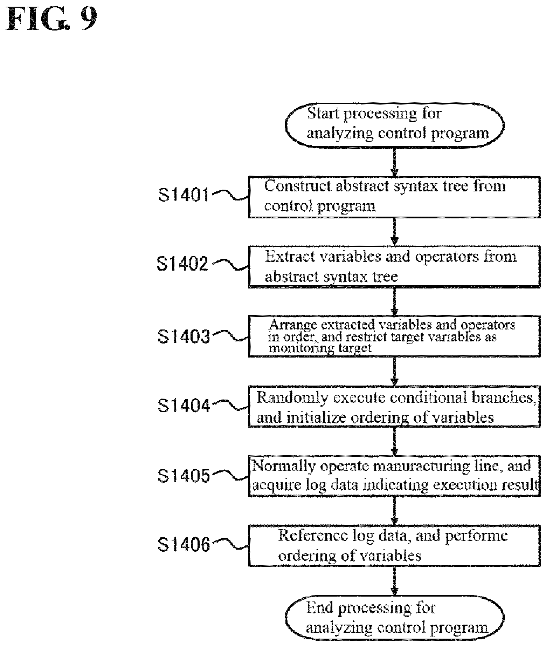

Here, processing for analyzing the control program 221 will be described in detail with reference to Fig. 9. Fig. 9 illustrates an example of a procedure of processing for analyzing the control program 221. In the following description, for convenience of description, assume that the manufacturing line 3 has four mechanisms F1 to F4 as the plurality of mechanisms 31, similar to the above, and, the controller 11 has acquired the control program 221 in which variables v1 to v4 corresponding to the four mechanisms F1 to F4 are used, in the above step S102.

Step S1401

First, in step S1401, the controller 11 performs syntax analysis of the acquired control program 221, and constructs an abstract syntax tree from the control program 221. A known syntax analysis method in which top-down syntax analysis or bottom-up syntax analysis is performed may be used for constructing an abstract syntax tree. For example, a syntax analyzer that handles texts in a specific formal grammar may be used for constructing an abstract syntax tree. When construction of an abstract syntax tree is complete, the controller 11 advances the procedure to the next step S1402.

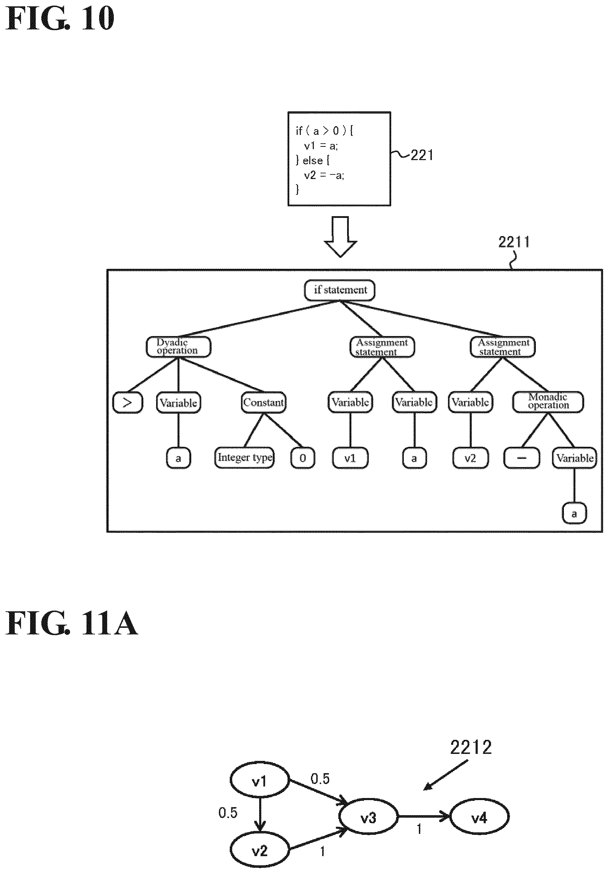

Fig. 10 illustrates an abstract syntax tree 2211 that is acquired from a syntax "if(a>0){v1=a;}else{v2=-a;}" within the control program 221. As illustrated in Fig. 10, the abstract syntax tree has a data structure in which the program is expressed in a tree structure, such that the meaning of the program is interpreted.

Specifically, the controller 11 omits, from among tokens (letters and phrases) used in the program, tokens such

as a parenthesis that are not required to interpret the meaning of the program, and extracts tokens related to interpretation of the meaning of the program. The controller 11 then associates an operator such as a conditional branch with a nodal point, and associates an operand such as a variable with a leave. The controller 11 can construct an abstract syntax tree illustrated in Fig. 10 by performing syntax analysis of the control program 221 in this manner. Note that an abstract syntax tree configured in this manner indicates variables, operators, and relationship between nodes (e.g., relationship between an operator and an operand). Regarding the configuration of this abstract syntax tree, modification of the expression, change, omission and the like may be made as appropriate within a range in which the content indicated by this abstract syntax tree is not changed

Step S1402

**[0086]** In the next step S1402, the controller 11 extracts variables (v1 to v4) for the mechanisms 31, and operators including conditional branches and assignment calculation, from the abstract syntax tree constructed in step S1401. For example, in the case where the abstract syntax tree 2211 shown in Fig. 10 is acquired, the controller 11 extracts ("if', "v1", "=", "a", "v2", "=", and "-a") from the abstract syntax tree 2211. When such extraction is complete, the controller 11 advances the procedure to the next step S1403.

Steps S1403 and S1404

**[0087]** In the next step S1403, the controller 11 arranges the variables and operators extracted in step S1402 in order, and restricts a target for monitoring an execution order to a portion related to variables (v1 to v4) corresponding to the mechanisms 31 between which the causal relationship is to be identified. In the above example, the controller 11 further extracts ("if', "v1", and "v2") from ("if', "v1", "=", "a", "v2", "=" and "-a").

**[0088]** Subsequently, in the next step S1404, by randomly selecting conditional branches, and attempting execution of the control program 221, ordering of the variables that are restricted is initialized. Specifically, in an attempt to execute the control program 221, the controller 11 can initialize ordering of the variables by monitoring the order of the restricted variables being used.

**[0089]** Fig. 11A illustrates an example of such initialization. A graph 2212 in Fig. 11A indicates the following order relationship of (1) to (5), as a result of initialization.

(1) A variable "v1" from among variables "v1" to "v4" is used first.
(2) After the variable "v1", the variable "v2" is used with the probability of 0.5, and the variable "v3" is used with the probability of 0.5.
(3) After the variable "v2", the variable "v3" is used with the probability of 1.
(4) After the variable "v3", the variable "v4" is used with the probability of 1.
(5) The variable "v4" from among the variables "v1" to "v4" is used last.

When such initialization is complete, the controller 11 advances the procedure to the next step S1405.

Step S1405

**[0090]** In the next step S1405, the controller 11 acquires, from the PLC 2, the log data 223 indicating an execution result when the manufacturing line 3 is normally operated using the control program 221. For example, when collecting the above state data 222, the PLC 2 may create the log data 223 indicating a result of executing the control program 221 as well. In this case, a time stamp, the value of a variable that has been used, and the like are recorded in the log data 223. Also, for example, a debug mode for collecting information such as a frequency at which each line of a code is executed, a line of a code that has been executed, and a computation time consumed by each section of a code may be provided for the control program 221. In this case, the PLC 2 can generate the log data 223 in which such information is recorded, by executing the control program 221 in a debug mode. The controller 11 may acquire the log data 223 created in this manner, from the PLC 2. When acquisition of the log data 223 is complete, the controller 11 advances the procedure to the next step S1406.

Step S1406

**[0091]** In the next step S1406, the controller 11 identifies the order relationship between the mechanisms 31 in the manufacturing line 3 by referencing the log data 223 acquired in step S1405, and performing ordering of the above variables (v1 to v4) based on a result of executing the conditional branches.

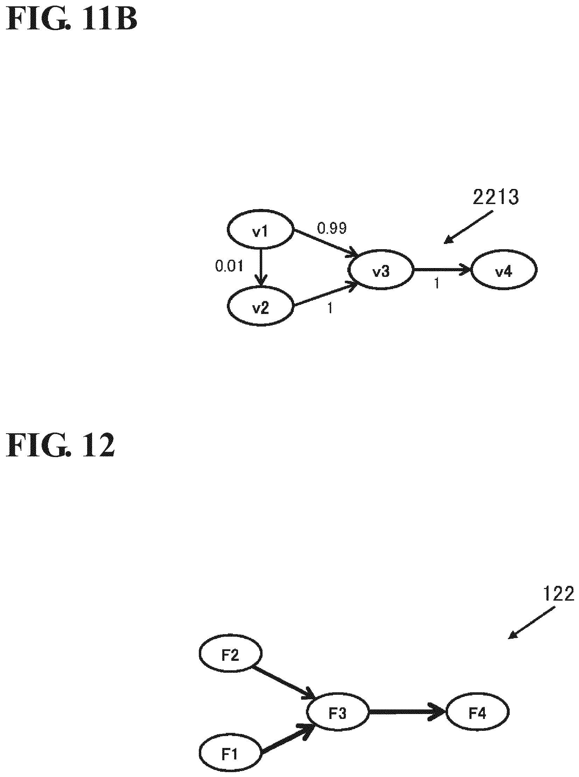

**[0092]** Fig. 11B illustrates an example of a result of such ordering. A graph 2213 in Fig. 11B indicates the following

order relationship of (A) to (E), as a result of performing ordering by using the log data 223.

(A) A variable "v1" from among variables "v1" to "v4" is used first.
(B) After the variable "v1", the variable "v2" is used with the probability of 0.01, and the variable "v3" is used with the probability of 0.99.
(C) After the variable "v2", the variable "v3" is used with the probability of 1.
(D) After the variable "v3", the variable "v4" is used with the probability of 1.
(E) The variable "v4" from among the variables "v1" to "v4" is used last.

With the above-described configuration, when identification of the order relationship between the plurality of mechanisms 31 is complete, processing for analyzing the control program 221 according to this embodiment is complete, and the controller 11 advances the procedure to the next step S105.

Step S105

Returning to Fig. 5, in the next step S105, the controller 11 operates as the relationship identifying unit 115. Specifically, the controller 11 identifies the causal relationship between the plurality of mechanisms 31 in a process that is carried out on the manufacturing line 3, based on the strength of the relationship and order relationship between the plurality of mechanisms 31 in the manufacturing line 3 that have been respectively identified in steps S103 and S104.

In this embodiment, the controller 11 creates directed graph information indicating the causal relationship between the mechanisms 31 by applying the order relationship between the mechanisms 31 that has been identified in the above step S1406 to the non-directed graph information 2223 constructed in the above step S1303. A configuration may be adopted in which, at this time, the controller 11 identifies an order (transition) that occurs in the order relationship between the mechanisms 31 with a probability that is lower than a threshold value, and deletes edges corresponding to the identified order from the edges constituting the non-directed graph information 2223. Note that the threshold value may be a fixed value defined within the process analysis program 121, or may be a setting value that can be changed by an operator or the like.

Fig. 12 illustrates an example of the directed graph information that is created. A directed graph 122 in Fig. 12 indicates the following causal relationship of (a) to (d).

(a) Mechanism "F1" or "F2" is used first from among mechanisms "F1" to "F4".
(b) After the mechanisms "F1" and "F2", the mechanism "F3" is used.
(c) After the mechanism "F3", the mechanism "F4" is used.
(d) The mechanism "F4" is used last from among the mechanisms "F1" to "F4". Note that, in the example in Fig. 12, an order from the variable "v1" to "v2" is unlikely to occur, and, correspondingly, an edge between the mechanisms "F1" and "F2" that existed is deleted from the non-directed graph information 2223. In addition, the thicknesses of the edges in the directed graph 122 are set in correspondence with the thicknesses of the edges in the non-directed graph information 2223. With the above-described configuration, when creation of directed graph information is complete, the controller 11 advances the procedure to the next step S106.

Note that, in the example in Fig. 12, in the directed graph information, a directed graph (the directed graph 122) is expressed as an image. However, the output format of the directed graph information does not need to be limited to an image, and the directed graph information may be expressed as text and the like. In addition, in the above example, the strength of the relationship between nodes (mechanisms 31) is indicated by the thickness of an edge. However, a method for expressing the strength of the relationship between nodes does not need to be limited to such an example. The strength of the relationship between nodes may be expressed by adding a numeric character in the vicinity of an edge.

Step S106

In the next step S106, the controller 11 outputs the directed graph information created in step S105. For example, the controller 11 outputs the created directed graph to an output apparatus 15 such as a display. With the above-described configuration, the controller 11 ends the processing according to this exemplary operation.

Features

As described above, in this embodiment, the order relationship between the plurality of mechanisms 31 in the manufacturing line 3 is identified by analyzing the control program 221 in the above step S104. Directed graph information indicating the causal relationship between the plurality of mechanisms 31 in a process that is carried out on the manufacturing line 3 is then created by applying the order relationship identified from the control program 221 to the non-directed graph information indicating the strength of the relationship derived from the state data 222 in the above step S103. Here, the control program 221 prescribes the operations of the mechanisms 31. Therefore, by using the control program 221 at a stage for analyzing the causal relationship between the plurality of mechanisms 31, it is possible to appropriately identify the order relationship between the plurality of mechanisms 31. Therefore, according to this embodiment, it is possible to accurately model the causal relationship between the plurality of mechanisms 31 that constitute the manufacturing line 3.

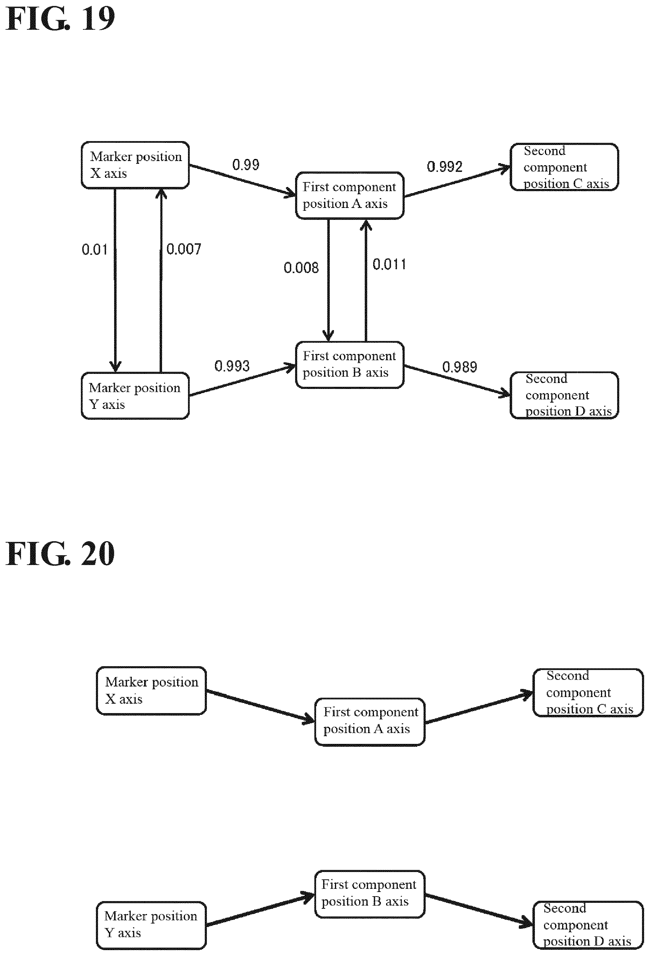

In addition, in this embodiment, directed graph information illustrated in Fig. 12 (and Fig. 20 that will be described later) is output in step S106 as a result of analysing the causal relationship between a plurality of mechanisms constituting a manufacturing line. This directed graph information that is output clearly indicates the causal relationship between the mechanisms. Therefore, according to this embodiment, with the use of directed graph information that is output, even non-experienced maintenance staff can easily understand the causal relationship between a plurality of mechanisms that constitute a manufacturing line.

Working Example

Next, a working example of a stage for generating, through processing in the above steps S101 to S106, directed graph information that indicates the causal relationship between the mechanisms 31 will be described. Note that the invention is not limited to the following working example.

As a working example, directed graph information that indicates the causal relationship between mechanisms in a manufacturing line having the following conditions was generated.

Various conditions

- Manufacturing line: a manufacturing apparatus that fixes two components at mounting positions on a substrate.
- (Six) mechanisms:

    a first mechanism that adjusts the position of a substrate (marker) along an X axis,
    a second mechanism that adjusts the position of a substrate (marker) along a Y axis,
    a third mechanism that adjusts the position of a first component along an A axis,
    a fourth mechanism that adjusts the position of the first component along a B axis,
    a fifth mechanism that adjusts the position of a second component along a C axis, and
    a sixth mechanism that adjusts the position of the second component along a D axis.

- Program language of control program: ST language
- Measurement apparatus: camera
- State data: positions along the axes adjusted by the mechanisms
- Feature amount: instantaneous value
- Process analysis apparatus: general-purpose PC

Note that, for convenience of description, the first to sixth mechanisms are also referred to as a "marker position X axis", "marker position Y axis", "first component position A axis", "first component position B axis", "second component position C axis", and "second component position D axis". The "X axis", "A axis", and "C axis" correspond to the vertical axis of an image acquired using a camera, and the "Y axis", "B axis", and "D axis" correspond to the horizontal axis of the image.

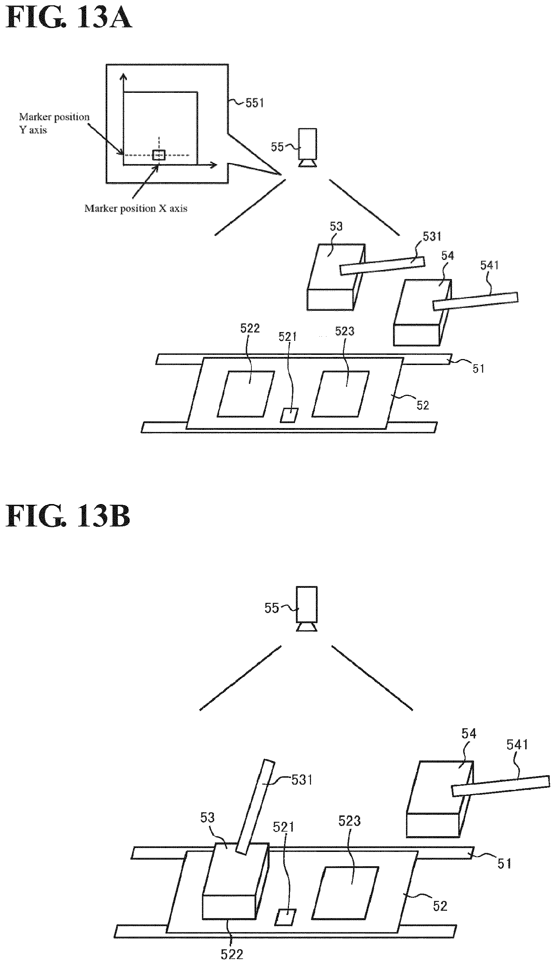

Here, a manufacturing apparatus that constitutes the manufacturing line according to the working example will be described with reference to Figs. 13A to 13C. Figs. 13A to 13C schematically illustrate the configuration of a manufacturing apparatus. As shown in Figs. 13A to 13C, the manufacturing apparatus according to the working example includes a conveyor 51 for carrying a substrate 52, a first robot arm 531 for carrying a first component 53, a second robot arm 541 for carrying a second component 54, and a camera 55 that captures images of a work place. The position of the substrate 52 on the conveyor 51 is adjusted by a first mechanism and a second mechanism, the position of the first component 53 held by the first robot arm 531 is adjusted by a third mechanism and a fourth mechanism, and the position of the second component 54 held by the second robot arm 541 is adjusted by a fifth mechanism and a sixth mechanism.

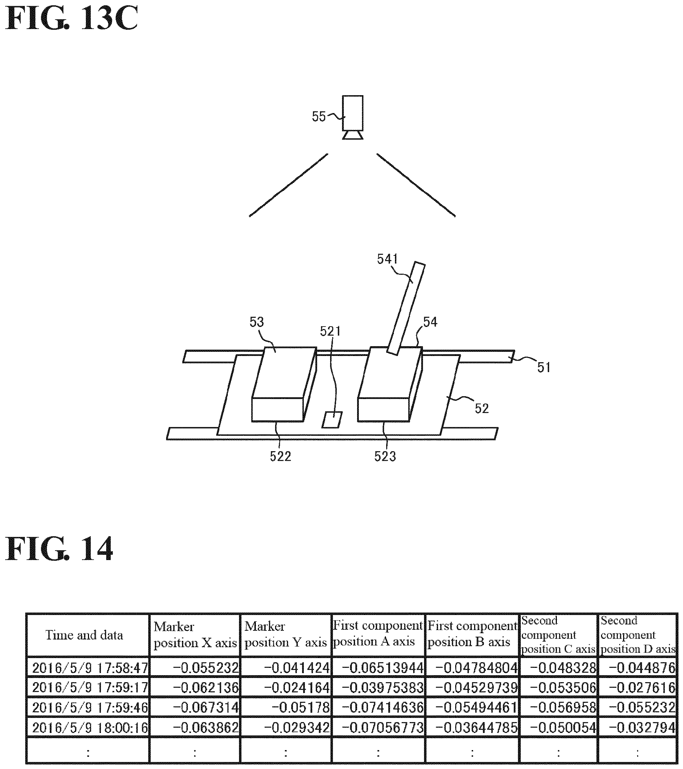

The manufacturing apparatus carries the substrate 52 to a predetermined position using the conveyor 51 (Fig. 13A). A marker 521 is provided on a surface of the substrate 52, and positioning is performed using this marker 521. Next, the manufacturing apparatus fixes the first component 53 at a first mounting position 522 provided on the surface of the substrate 52 using the first robot arm 531 (Fig. 13B). The manufacturing apparatus also fixes the second component 54 at a second mounting position 523 provided on the surface of the substrate 52, using the second robot arm 541 (Fig. 13C). Accordingly, it is possible to manufacture a product that has two components (53 and 54) provided on the upper surface of the substrate 52.

In this working example, in order to carry out processing for analyzing state data, 1000 products were intermittently manufactured, and images of the manufacturing stage were captured using the camera 55. Note that the time required to manufacture one product was about one minute. In addition, feature amounts corresponding to the mechanisms were acquired by identifying, within a piece of acquired image data 551, the positions (coordinates) of the substrate 52 (the marker 521) along of the X axis and the Y axis, the positions of the first component 53 along the A axis and the B axis, and the positions of the second component 54 along the C axis and the D axis. Fig. 14 shows some of the feature amounts acquired in the above manner.

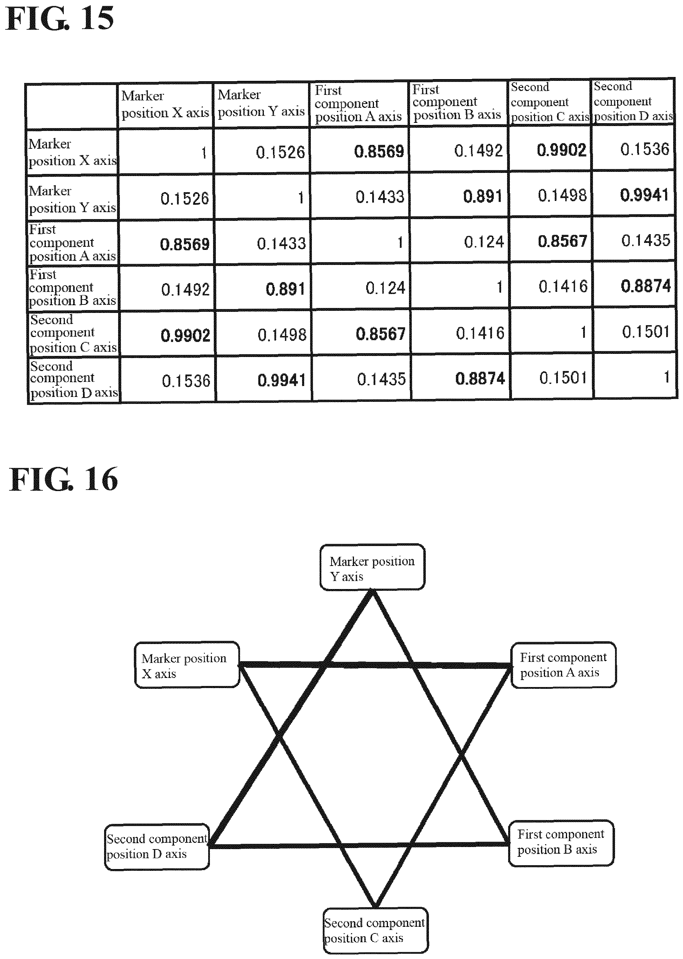

Subsequently, by applying the feature amounts shown in Fig. 14 to Expression 1 above, a correlation coefficient matrix indicating the correlation between the feature amounts is calculated. Fig. 15 shows the calculated correlation coefficient matrix. Non-directed graph information indicating the strength of the relationship between mechanisms was acquired by extracting elements between which the value of the correlation coefficient is larger than or equal to a threshold value 0.2, from among the elements of this correlation coefficient matrix. Fig. 16 shows non-directed graph information acquired in this manner.

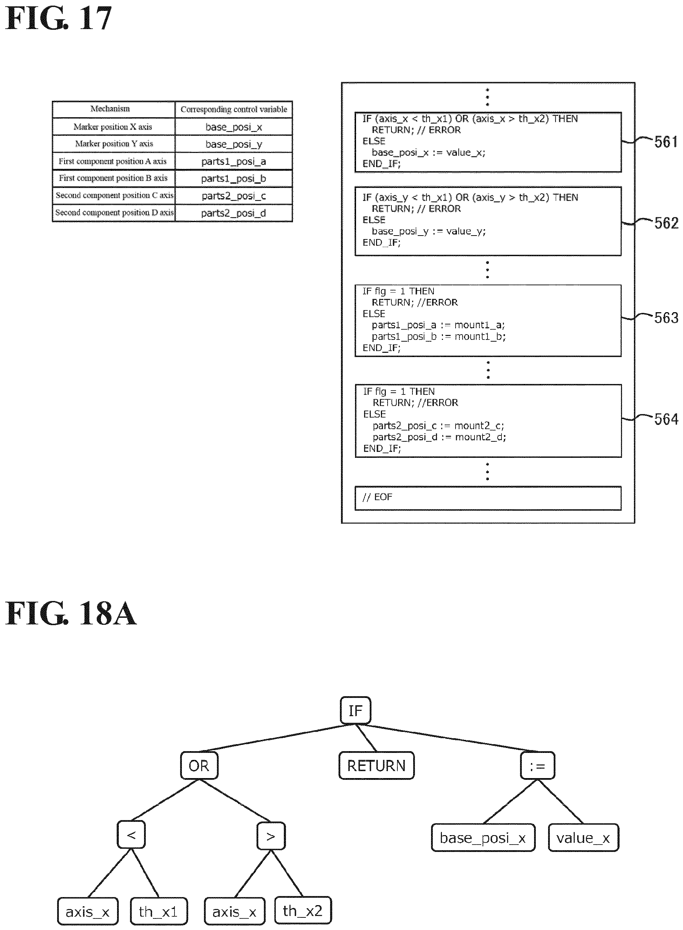

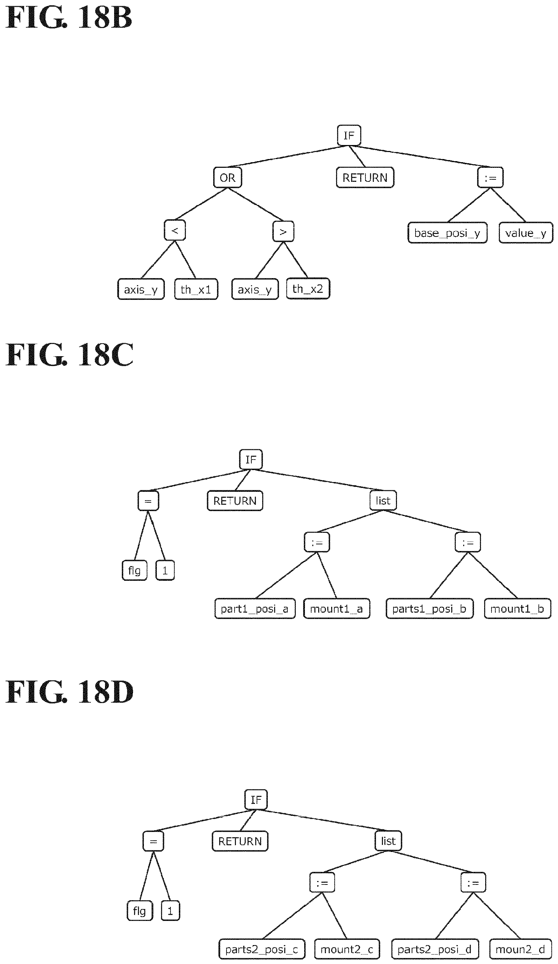

In addition, a control program that is used for the above manufacturing apparatus was acquired in order to carry out processing for analyzing the control program. Fig. 17 shows a portion of the control program acquired in this manner. Next, by carrying out syntax analysis of this control program using known software (Sysmac (registered trademark) Studio), an abstract syntax tree was constructed. Figs. 18A to 18D each show a portion of the abstract syntax tree constructed in this manner. The portions of the abstract syntax tree shown in Figs. 18A to 18D correspond to syntaxes indicated by reference numerals 561 to 564 in Fig. 17. The processing in the steps S1402 to S1404 was applied to this abstract syntax tree, and ordering of variables corresponding to the mechanisms was initialized. Furthermore, the order relationship between the mechanisms when normally operated was identified by using log data acquired in the above-described manufacturing process. Fig. 19 indicates the order relationship between the mechanisms identified in this manner. Note that numeral characters added to edges in Fig. 19 indicate a probability with which transition between the nodes occurs, and the directions of arrows indicate the directions of transitions.

Directed graph information indicating a causal relationship between the mechanisms was then acquired by applying the order relationship (Fig. 19) identified by analyzing the control program to the non-directed graph information (Fig. 16) acquired by analyzing the state data. When forming directed graph information, edges corresponding to transitions that occur in the order relationship shown in Fig. 19 with a probability that is smaller than a threshold value 0.1 were deleted. Fig. 20 shows directed graph information acquired in this manner. The directed graph information in Fig. 20 indicates a causal relationship in which the manufacturing apparatus performs "movement of a substrate (marker)", "mounting of a first component", and "mounting of a second component" in the stated order regarding the axes. This causal relationship coincides with the actual operation of the manufacturing apparatus. Therefore, it was found that, according to the method of the above embodiment, the causal relationship between a plurality of mechanisms that constitutes a manufacturing line can be modelled accurately.

§4 Modified Examples

The embodiment of the invention has been described above in detail, but the above description is merely exemplary of the invention in all respects. It is needless to say that various modifications and deformations can be made without departing from the scope of the invention. For example, the following modifications are possible. Note that, in the following description, similar reference numerals are used for constituent elements similar to those of the above embodiment, and description of contents similar to those of the above embodiment is omitted as appropriate. The following modified examples can be combined as appropriate.

4.1

In the above embodiment, the process analysis apparatus 1 acquires the control program 221 from the PLC 2 that is a control apparatus that controls the manufacturing line 3. However, a control program that is to be analyzed does not need to be acquired from a control apparatus that uses the control program, and may be selected as appropriate according to an embodiment. For example, in the case where a control program is stored in an external storage apparatus such as an NAS (Network Attached Storage), the process analysis apparatus 1 may acquire the control program from the external storage apparatus. In addition, for example, in the case where a control program is stored in a storage medium such as a CD or a semiconductor memory, the process analysis apparatus 1 may acquire the control program from the storage medium. Specifically, in the above embodiment, a control program is analyzed by constructing an abstract syntax tree. This abstract syntax tree can be created at a stage for compiling a program written in a program language. Therefore, the process analysis apparatus 1 preferably acquires a pre-compiling program, as the control program 221. In the case where a control apparatus does not hold a pre-compiling program, the process analysis apparatus 1 may acquire a pre-compiling program that corresponds to a control program that is executed by the control apparatus, from an external apparatus, a storage medium, or the like other than the control apparatus.

4.2

In the above embodiment, the control program 221 is written using at least one of the ladder diagram language, the function block diagrammatic language, the structured text language, the instruction list language, the sequential function chart language, and the C language, for example, such that the PLC 2 can execute this program. However, the type of control program that is to be analyzed does not need to be limited to such an example, and may be selected as appropriate according to an embodiment. For example, a control program that is to be analyzed may be written using Java (registered trademark), Python, C++, Ruby, Lua, or the like.

4.3

In the above embodiment, the process analysis apparatus 1 acquires the state data 222 from the PLC 2 that controls the manufacturing line 3. However, an apparatus from which the state data that is to be analyzed is acquired does not need to be limited to the control apparatus that controls a manufacturing line, and may be selected as appropriate according to an embodiment. For example, in the case where state data is stored in an external storage apparatus such as an NAS, the process analysis apparatus 1 may acquire the state data from the external storage apparatus. In addition, for example, in the case where state data is stored in a storage medium such as a CD or a semiconductor memory, the process analysis apparatus 1 may acquire the state data from the storage medium. Furthermore, for example, the process analysis apparatus 1 may acquire state data directly from a measurement apparatus.

4.4

In the above embodiment, the process analysis apparatus 1 outputs a result of analyzing the causal relationship between the plurality of mechanisms 31, as directed graph information. However, the output format of the analysis result does not need to be limited to such an example, and may be selected as appropriate according to an embodiment. The result of analyzing the causal relationship may be expressed as a transition probability matrix, text, or the like.
In addition, in the above embodiment, directed graph information is created using the non-directed graph information constructed in step S1303. However, a method for creating directed graph information does not need to be limited to such an example. For example, the process analysis apparatus 1 may skip the above step S1303, and create directed graph information using a matrix of correlation coefficients or partial correlation coefficients.

4.5

In the above embodiment, the process analysis apparatus 1 and the PLC 2 are constituted by different computers. However, the process analysis apparatus 1 and the PLC 2 may be constituted by one computer. Accordingly, one computer may have the functions of both a process analysis apparatus and a control apparatus of a manufacturing line.

4.6

In the above embodiment, at a stage for analyzing the state data 222, before calculating correlation coefficients or partial correlation coefficients, the process analysis apparatus 1 calculates feature amounts from the respective pieces of the state data 222. However, a method for statistically analyzing the state data 222 does not need to be limited to such an example. For example, the process analysis apparatus 1 may calculate correlation coefficients or partial correlation coefficients using the pieces of the state data 222 without any change.
In addition, in the above embodiment, a correlation coefficient or partial correlation coefficient is used for indicating the strength of the relationship between mechanisms 31. However, an indicator that indicates the strength of the relationship between mechanisms does not need to be limited to a correlation coefficient or partial correlation coefficient, and may be selected as appropriate according to an embodiment. For example, as an indicator that indicates the strength of the relationship between mechanisms, a MIC (Maximum Information Coefficient), a HSIC (Hilbert-Schmidt Independence Criteria), a mutual information amount, or the like may be used.

4.7

In the above embodiment, the process analysis apparatus 1 analyzes the control program 221 using an abstract syntax tree. However, a method for analyzing the control program does not need to be limited to such an example, and may be selected as appropriate according to an embodiment. For example, the process analysis apparatus 1 may analyze the control program using a code of an intermediate language that is formed during compilation.

In addition, in the above embodiment, by referencing the log data 223 acquired by operating the manufacturing line 3 using the control program 221 after variables and conditional branches have been extracted from the abstract syntax tree, and performing ordering of the variables that is based on a result of executing the conditional branches, the order relationship between the plurality of mechanisms 31 is identified. However, a method for identifying the order relationship between the plurality of mechanisms 31 based on the log data 223 does not need to be limited to such an example. The above process analysis apparatus 1 may identify the order relationship between the plurality of mechanisms 31 by analyzing the log data 223 as appropriate.

4.8

In the above embodiment, in step S103, the process analysis apparatus 1 identifies the strength of the relationship between a plurality of mechanisms 31, as the connection state between the plurality of mechanisms 31. However, a method for expressing the connection state does not need to be limited to such an example, and may be determined as appropriate according to an embodiment. For example, the connection state between a plurality of mechanisms 31 may be expressed as the presence or absence of a relationship, a change in the relationship, or the like. A change in the relationship may be indicated by a difference (change amount) in relationship in time series that is expressed by the strength of the relationship or the presence or absence of a relationship, for example.

4.9

In the above embodiment, in step S103, the process analysis apparatus 1 statistically analyzes a plurality of pieces of state data 222 by calculating a correlation coefficient or partial correlation coefficient. However, a method for statistically analyzing a plurality of pieces of state data 222 does not need to be limited to such an example, and may be determined as appropriate according to an embodiment. The controller 11 may statistically analyze a plurality of pieces of state data 222, for example, through GLASSO (Graphical LASSO), covariance selection models, or the like, in the above step S103. Accordingly, the controller 11 can acquire a non-directed graph indicating the connection state between a plurality of mechanisms 31. In addition, in the above step S103, the controller 11 may statistically analyze the plurality of pieces of state data 222, using SGS (Spirtes, Glymour, and Scheines), PC (Peter & Clark), FCI (Fast Causal Inference), LiNGAM (Liner Non-Gaussian Acyclic Model), a bayesian network or the like. Accordingly, the controller 11 can acquire a directed graph indicating the connection state between a plurality of mechanisms 31.

4.10

In the above embodiment, the process analysis apparatus 1 statistically analyzes a plurality of pieces of state data 222 in step S103. However, a method for analyzing a plurality of pieces of state data 222 does not need to be limited to such a statistical technique, and the controller 11 may analyze the plurality of pieces of state data 222 using a method other than a statistic technique, in step S103.

For example, the controller 11 may calculate feature amounts from the respective pieces of the state data 222 acquired from the mechanisms 31, and identify the connection state between the plurality of mechanisms 31 based on a change in the calculated feature amounts. The type of the feature amounts that are calculated may be similar to that of the above step S1301. As an example of a method for identifying a connection state based on a change in feature amounts, when an abnormality such as a malfunction occurs between mechanisms 31 that are related, feature amounts acquired from the mechanisms 31 that are related undergo large changes. In view of this, the controller 11 may compare the change amounts of the calculated feature amounts with a predetermined threshold value, and extract feature amounts that have changed by the threshold value or more. The controller 11 may then determine that the mechanisms 31 corresponding to the extracted feature amounts are related, and identify the connection state.

In addition, for example, the controller 11 may analyze a plurality of pieces of state data 222 using a learning model that is acquired through machine learning of a decision tree, logistic regression, a bayesian network, a neural network, or the like. As an example of a technique for using a learning model, the controller 11 may acquire a trained learning model that has undergone machine learning for obtaining to ability to determine, based on state data, whether or not an abnormality has occurred. The controller 11 may then input a plurality of pieces of the state data 222 to the acquired learning model, and acquire output indicating whether or not an abnormality has occurred in the corresponding mechanisms 31, from the trained learning model. Accordingly, the controller 11 considers that mechanisms 31 between which an abnormality is determined to have occurred are related, and thereby can identify the connection state between a plurality of mechanisms 31.

4.11

In the above embodiment, in the above step S104, the process analysis apparatus 1 identifies the order relationship between a plurality of mechanisms 31 using the log data 223. However, a method for identifying the order relationship between a plurality of mechanisms 31 does not need to be limited to such a method that uses the log data 223. The process analysis apparatus 1 may identify the order relationship between the plurality of mechanisms 31 without using the log data 223.

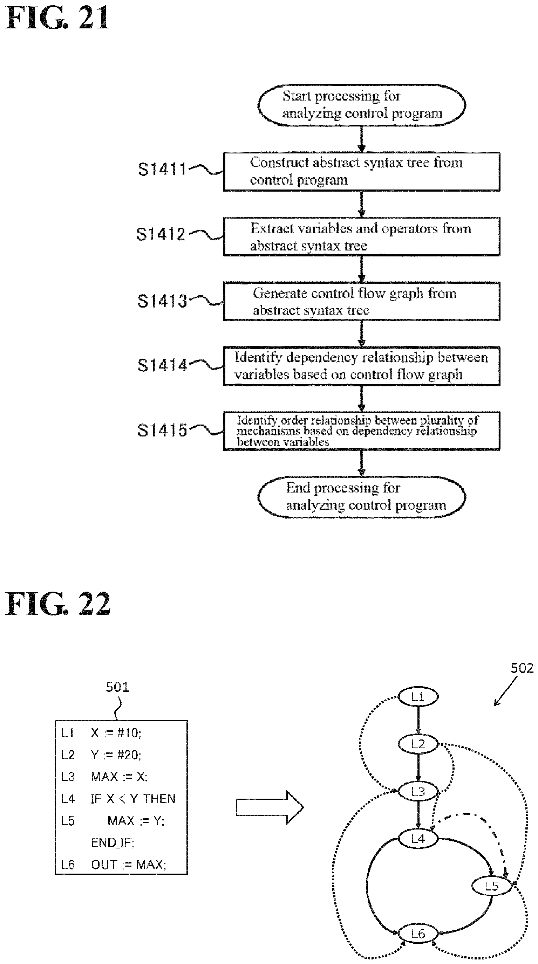

Fig. 21 is a flowchart showing an example of a processing procedure for analyzing the control program 221 in this modified example. For example, the controller 11 may operate as the second analyzer 114, and identify the order relationship between the plurality of mechanisms 31 through a processing procedure shown in Fig. 21, in place of the above step S104.

Step S1411

In step S1411, the controller 11 constructs an abstract syntax tree from the control program 221 by performing syntax analysis on the acquired control program 221. The abstract syntax tree may be constructed in a manner similar to the above step S1401. When construction of the abstract syntax tree is complete, the controller 11 advances the procedure to the next step S1412.

Step S1412

In step S1412, the controller 11 extracts variables for the respective mechanisms 31 from the abstract syntax tree constructed in step S1411. Extraction of variables may be performed in a similar manner to the above step S1402. When extraction of variables for the respective mechanisms 31 is complete, the controller 11 advances the procedure to the next step S1413.

Step S1413

In step S1413, the controller 11 generates a control flow graph from the abstract syntax tree constructed in step S1411. The control flow graph indicates all routes that may be passed through when executing a program, as a graph.

Here, the control flow graph will be described with further reference to Fig. 22. Fig. 22 schematically illustrates an example of a program (a program 501) and an example of a control flow graph (a control flow graph 502) that is derived from the example of the program. In the example in Fig. 22, the program 501 includes processing L1 to L6. By analyzing the dependency of the program 501 using an abstract syntax tree that is constructed from this program 501, the control flow graph 502 shown in Fig. 22 can be acquired.

The control flow graph 502 indicates a flow of processing of the program 501 (solid-line arrows), dependency of data (dotted-line arrows), and dependency of control (dashed-dotted-line arrows). The flow of processing indicates the order of execution of processing within the program. For example, in the program 501, the processing L2 is executed after the processing L1. Therefore, in the control flow graph 502, the processing L1 and the processing L2 are coupled with each other using an arrow indicating a flow of processing. In addition, the processing L4 is a branch syntax, and the processing to be executed next is determined to be the processing L5 or the processing L6, based on a result of executing the processing L4. Therefore, the processing L4 is coupled with the processing L5 and the processing L6 using arrows indicating a flow of processing.

The dependency of data indicates the relationship between processing that has an effect and processing that is affected. For example, in the program 501, the processing L2 affects the results of the processing L4 and the processing L5. Therefore, in the control flow graph 502, the processing L2 is coupled with the processing L4 and the processing L5 using arrows indicating the dependency of data. In addition, the dependency of control indicates the relationship of processing that is determined to be executed or not using a conditional branch or the like and processing that serves as a basis for the determination. For example, in the program 501, it is determined whether or not the processing L5 can be executed, based on a result of executing the processing L4. Therefore, in the control flow graph 502, the processing L4 is coupled with the processing L5 using an arrow indicating the dependency of control.

According to the control flow graph, as described above, it is possible to identify the dependency relationship between processes including calculation of variables in the control program 221. The controller 11 generates a control flow graph by performing dependency analysis of the control program 221 using the abstract syntax tree. When generation of a control flow graph is complete, the controller 11 advances the procedure to the next step S1414. Note that this step S1413 may be executed before the above step S1412, or may be executed in parallel with the above step S1412.

Steps S1414 and S1415

In step S1414, the controller 11 identifies the dependency relationship between the extracted variables based on the generated control flow graph. In this modified example, in the above step S1413 and this step S1414, the controller 11 identifies the dependency relationship between the variables in processing of the control program 221 based on the abstract syntax tree constructed in step S1411. Subsequently, in the next step S1415, the controller 11 identifies the order relationship between a plurality of mechanisms 31 based on the identified dependency relationship between the variables. When identification of the order relationship between the plurality of mechanisms 31 is complete, the processing for analyzing the control program 221 according to this modified example ends.

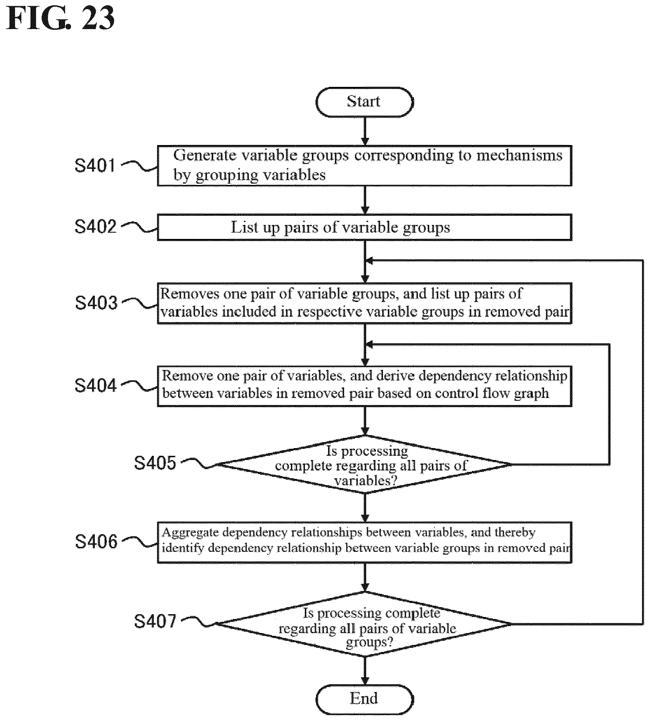

Here, processing in steps S1414 and S1415 will be described with further reference to Fig. 23. Fig. 23 is a flowchart showing an example of a processing procedure for identifying the dependency relationship between variables based on a control flow graph, and identifying the order relationship between a plurality of mechanisms 31 based on the identified dependency relationship between the variables.

Step S401

In step S401, the controller 11 generates variable groups for the respective mechanisms 31 by grouping the variables extracted in step S1412.

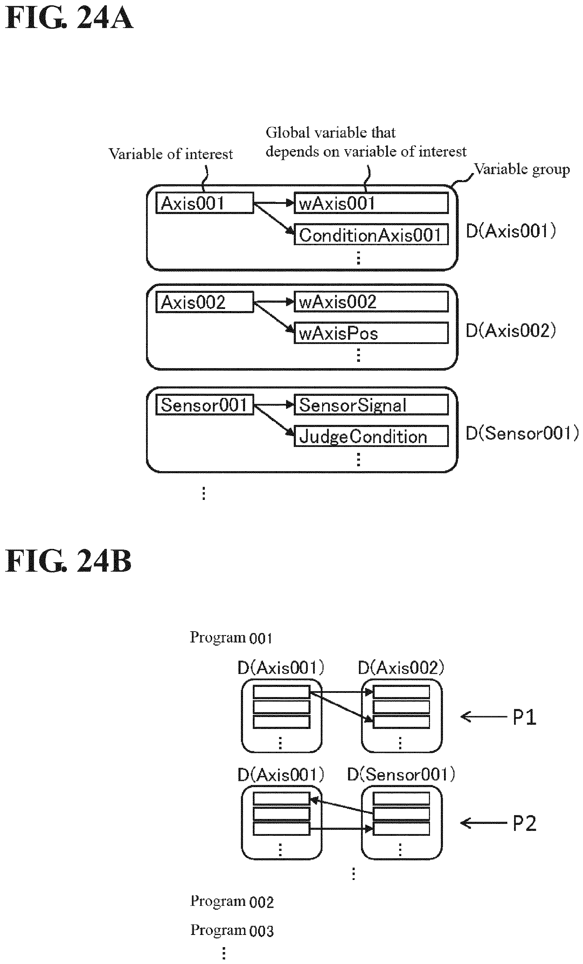

Fig. 24A schematically illustrates an example of a scene in which variable groups are generated. In the case where the control program 221 is divided into a plurality of programs, the same name is not necessarily assigned to variables corresponding to the same mechanism 31. In view of this, the controller 11 selects variables of interest corresponding to the mechanisms 31, from the variables acquired in step S1412. Subsequently, the controller 11 extracts global variables that respectively depend on the variables of interest, from the variables acquired in step S1412. The controller 11 then generates groups of each of the variables of interest and a global variable that depends on the variable of interest, as variable groups respectively corresponding to the mechanisms 31. Accordingly, the controller 11 can group the variables in correspondence with the mechanisms 31. When grouping of the variables is complete, the controller 11 advances the procedure to the next step S402.

Step S402

In step S402, the controller 11 selects two variable groups by round robin from the variable groups generated in step S401. Accordingly, the controller 11 generates a pair (combination) of variable groups, and lists up the generated pair of variable groups. For example, assume that three variable groups, namely D(A), D(B), and D(C) were generated. In this case, the controller 11 can list up three pairs of variable groups, namely (D(A), D(B)), (D(A), D(C)), (D(B), D(C)) through the processing in this step S402. When the pairs of variable groups are listed up, the controller 11 advances the procedure to the next step S403.

Step S403

In step S403, the controller 11 removes a pair of variable groups from the pairs of variable groups listed up in step S402, and removes one variable from each of the variable groups in the removed pair by round robin. Accordingly, the controller 11 generates a pair (combination) of variables included in the respective variable groups, and lists up the generated pair of variables. For example, assume that a pair (D(A), D(B)) is removed, where two variables AA1 and AA2 are included in the variable group D(A), and two variables BB1 and BB2 are included in the variable group D(B). In this case, the controller 11 can list up four pairs of variables, namely (AA1, BB1), (AA1, BB2), (AA2, BB1), and (AA2, BB2) through the processing in this step S403. When listing up of pairs of variables is complete, the controller 11 advances the procedure to the next step S404.

Step S404

In step S404, the controller 11 removes a pair of variables from the pairs of variables listed up in step S403, and derives the dependency relationship between the variables in the removed pairs, based on the control flow graph. For example, assume that a pair (AA1, BB1) is removed. In the case where the control flow graph indicates a dependency relationship in which processing including BB1 is executed after processing including AA1, the controller 11 can derive the existence of a dependency relationship of an order of AA1 preceding BB1, in this step S404. Similarly, in the case where the control flow graph indicates a dependency relationship in which processing including AA1 is executed after processing including BB1, the controller 11 can derive the existence of a dependency relationship of an order of BB1 preceding AA1, in this step S404. On the other hand, in the case where, in the control flow graph, the processing including AA1 and the processing including BB1 are not coupled directly or indirectly, the controller 11 can identify that there is no dependency relationship between AA1 and BB1, in this step S404. When such derivation of dependency relationship is complete, the controller 11 advances the procedure to the next step S405.

Step S405

In step S405, the controller 11 determines whether or not the processing in step S404 is complete regarding all of the pairs of variables. If it is determined that the processing in step S404 is not complete regarding all of the pairs of variables, the controller 11 returns the procedure to step S404, and executes the processing for deriving a dependency relationship regarding another pair of variables. Accordingly, the controller 11 executes the processing for deriving a dependency relationship in step S404 regarding all of the pairs of variables listed up in step S403. When the processing for deriving a dependency relationship is complete regarding all of the pairs of variables, the controller 11 determines that the processing in step S404 is complete regarding all of the pairs of variables, and advances the procedure to the next step S406.

Step S406

In step S406, the controller 11 aggregates the dependency relationships between the variables acquired by repeating the processing in step S404, into the dependency relationship between the variable groups in the pair removed in step S403. Accordingly, the controller 11 identifies the dependency relationship between the variable groups in the removed pair, that is the order relationship between two mechanisms 31 corresponding to the variable groups in the removed pair.
Fig. 24B schematically illustrates a dependency relationship acquired between variables. Regarding a pair P1, a dependency relationship of an order of the variables in a variable group D(Axis001) preceding the variables in a variable group D(Axis002) is acquired. In this case, in this step S406, the controller 11 can identify the order relationship of a mechanism 31 corresponding to the variable group D(Axis001) preceding a mechanism 31 corresponding to the variable group D(Axis002). In other words, in the case where the dependency relationship of the order is biased in one direction, the controller 11 can identify that an order relationship in this direction exists between the two mechanisms 31.
On the other hand, a pair P2 has a dependency relationship of an order of the variables in a variable group D(Sensor001) preceding the variables in the variable group D(Axis001), and a dependency relationship of an order of the variables in the variable group D(Axis001) preceding the variables in the variable group D(Sensor001). In this case, the controller 11 may identify that there is a bidirectional order relationship between two mechanisms 31 corresponding to the variable groups of the removed pair. Alternatively, the controller 11 may identify an order relationship between the two mechanisms 31 by adopting an order relationship out of the bidirectional order relationship between the two mechanisms 31 corresponding to the variable groups of the removed pair, based on a predetermined method.
For example, the controller 11 may receive, from the user, selection of an order relationship that is to be adopted, out of bidirectional order relationship between two mechanisms 31. In this case, the controller 11 can adopt the order relationship identified by the user as order relationship between two mechanisms 31.
Note that, in the case where no pair of variables has a dependency relationship, the controller 11 can identify that there is no order relationship between the two mechanisms 31 corresponding to the variable groups in the removed pair. Accordingly, when identification of the order relationship between the two mechanisms 31 is complete, the controller 11 advances the procedure to the next step S407.

Step S407

In step S407, the controller 11 determines whether or not a series of processing in steps S403 to S406 is complete regarding all of the pairs of variable groups. If it is determined that the series of processing in steps S403 to S406 is not complete regarding all the pairs of variable groups, the controller 11 returns the procedure to step S403, and executes the series of processing in steps S403 to S406 on another pair of variable groups. Accordingly, the controller 11 executes processing for identifying the order relationship between mechanisms 31 in steps S403 to S406, on all of the pairs of variable groups listed up in step S402.

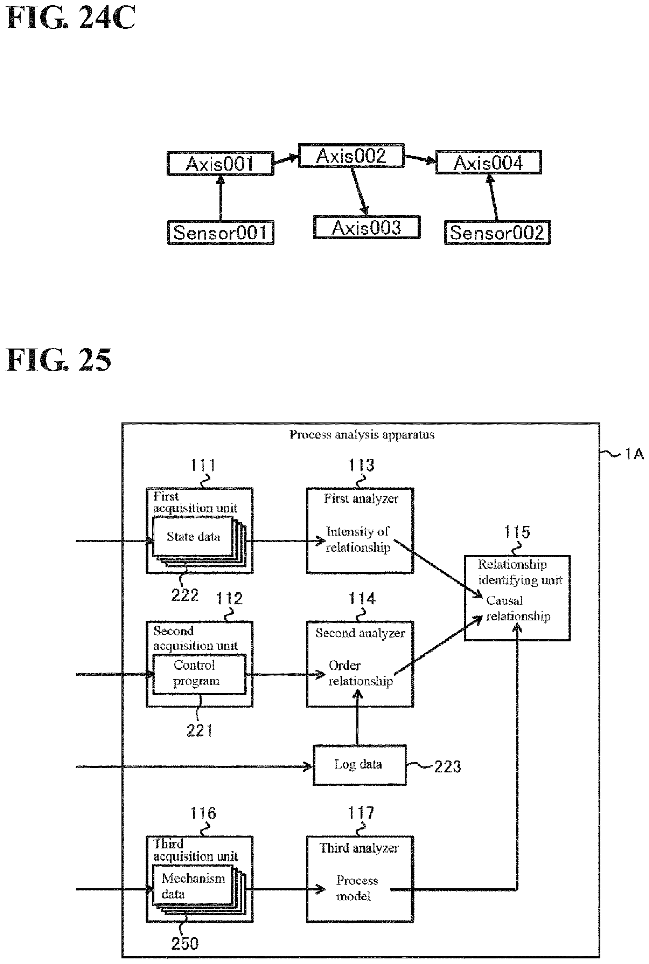

Fig. 24C schematically illustrates an example of the order relationship between a plurality of mechanisms 31 that has been identified based on the dependency relationship of an order of variables. As a result of executing the series of processing in steps S403 to S406 regarding all of the pairs of variable groups, the controller 11 can identify the order relationship between all of the mechanisms 31 as illustrated in Fig. 24C. When the processing for identifying the order relationship between all of the mechanisms 31 in this manner is complete, the controller 11 determines that the processing in steps S403 to S406 is complete regarding all of the pairs of variable groups, and ends the processing for identifying the order relationship between the plurality of mechanisms 31 using the control flow graph.

As described above, according to a processing procedure according to this modified example, the order relationship between the plurality of mechanisms 31 can be identified by analyzing the control program 221 without using the log data 223. Note that, in this modified example, a step for identifying the dependency relationship between variables in the processing of the control program 221 based on a constructed abstract syntax tree includes a step for generating a control flow graph from the constructed abstract syntax tree (step S1413), and a step for identifying the dependency relationship between extracted variables based on the generated control flow graph (step S1414). However, the step for identifying the dependency relationship between variables in the processing of the control program 221 based on a constructed abstract syntax tree does not need to be limited to such an example. The controller 11 may identify the dependency relationship between variables in the processing of the control program 221 based on an abstract syntax tree without using a control flow graph.

4.12

In the above embodiment, the strength of the relationship between a plurality of mechanisms 31 (connection state) that is identified from the state data 222 and the order relationship between the plurality of mechanisms 31 identified from the control program 221 are used in order to identify the causal relationship between the plurality of mechanisms 31. However, information used for identifying the causal relationship does not need to be limited to these pieces of information only. The above process analysis apparatus 1 may identify the causal relationship between a plurality of mechanisms 31 by using other information in addition to the strength of the relationship (connection state) and the order relationship.

Fig. 25 schematically illustrates an example of the software configuration of a process analysis apparatus 1A according to this modified example. The process analysis apparatus 1A further includes a third acquisition unit 116 that acquires mechanism data 250, and a third analyzer 117 that identifies a process model indicating the order relationship between a plurality of mechanisms 31 by analyzing the acquired mechanism data 250, and modelling a process that is carried out on the manufacturing line. In addition, the relationship identifying unit 115 identifies the causal relationship between a plurality of mechanisms 31 in a process that is carried out on the manufacturing line 3, based on the strength of the relationship, the order relationship, and the process model that have been identified. Except for that, the process analysis apparatus 1A is configured similar to the above process analysis apparatus 1. Also, the process analysis apparatus 1A may have a hardware configuration similar to that of the above process analysis apparatus 1.

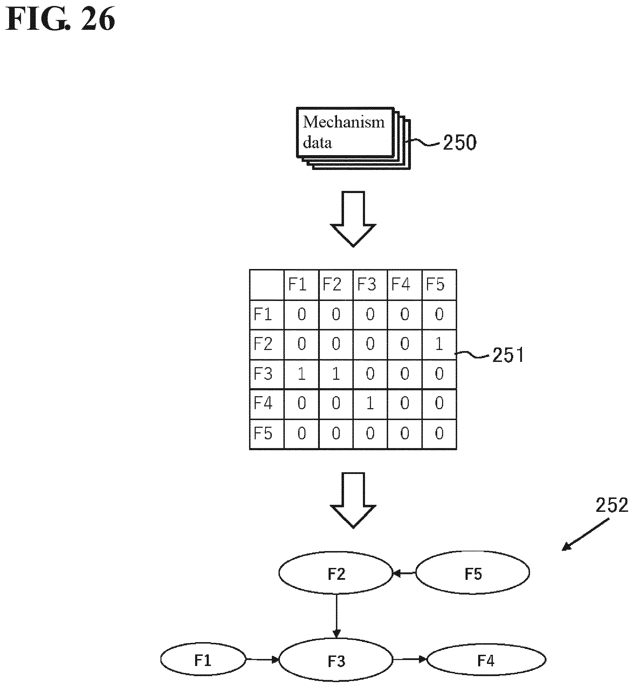

Fig. 26 schematically illustrates an example of a stage for identifying a process model 252 by analyzing the mechanism data 250. The controller 11 of the process analysis apparatus 1A operates as the third acquisition unit 116 before executing the above step S105, and acquires the mechanism data 250. As long as the mechanism data 250 is data related to at least one of the relative positional relationship between apparatuses included in the respective mechanisms 31, and the order of apparatuses involved in a process, the mechanism data 250 does not need to be limited particularly, and for example, may be a list of apparatuses, a list of sensors for monitoring operations of apparatuses, information indicating an order of processes, information indicating installation positions of sensors, and the like. Subsequently, the controller 11 identifies the process model 252 by operating as the third analyzer 117, and analyzing the mechanism data 250. For example, the controller 11 identifies the order relationship between two mechanisms 31 by referencing the mechanism data 250, and inputs an identification result to corresponding cells in a table 251 indicating the relationship between the two mechanisms 31. The controller 11 can identify the process model 252 by completing the table 251.

Subsequently, in the above step S105, the controller 11 identifies the causal relationship between the plurality of mechanisms 31 in a process that is carried out on the manufacturing line 3, based on the strength of the relationship, the order relationship, and the process model that have been identified. For example, the controller 11 may identify the presence or absence of a relationship between the mechanisms 31 using a product of the strength of the relationship, the order relationship, and the process model that have been identified. According to this modified example, it is possible to more accurately model the causal relationship between the plurality of mechanisms 31 that constitute the manufacturing line 3, by further using the knowledge of the process model identified from the mechanism data 250.

**Claims**

1.   A process analysis apparatus comprising:

a first acquisition unit configured to acquire a plurality of pieces of state data related to states of a plurality of mechanisms that constitute a manufacturing line;

a second acquisition unit configured to acquire a control program for controlling an operation of the manufacturing line;

a first analyzer configured to analyze the acquired plurality of pieces of state data so as to identify a connection state between the plurality of mechanisms;

a second analyzer configured to analyze the acquired control program so as to identify an order relationship between the plurality of mechanisms; and

a relationship identifying unit configured to identify a causal relationship between the plurality of mechanisms in a process that is carried out on the manufacturing line, based on the identified connection state and order relationship.

2. The process analysis apparatus according to claim 1,
wherein the relationship identifying unit outputs directed graph information indicating the identified causal relationship between the plurality of mechanisms.

3. The process analysis apparatus according to claim 2,
wherein the first analyzer constructs non-directed graph information indicating the identified connection state between the plurality of mechanisms, and
the relationship identifying unit creates the directed graph information by applying the order relationship to the non-directed graph information.

4. The process analysis apparatus according to any one of claims 1 to 3,
wherein the first analyzer identifies a connection state between the plurality of mechanisms by (1) calculating feature amounts from the plurality of pieces of state data, and (2) calculating a correlation coefficient or a partial correlation coefficient between the feature amounts.

5. The process analysis apparatus according to any one of claims 1 to 4,
wherein the second analyzer identifies an order relationship between the plurality of mechanisms based on log data that is acquired by operating the manufacturing line using the control program.

6. The process analysis apparatus according to claim 5,
wherein the second analyzer identifies an order relationship between the plurality of mechanisms by (1) constructing an abstract syntax tree from the control program, (2) extracting variables and conditional branches for the respective mechanisms from the constructed abstract syntax tree, (3) acquiring log data while the manufacturing line is operated normally using the control program, and (4) performing ordering of the variables that is based on a result of executing the conditional branches, by referencing the acquired log data.

7. The process analysis apparatus according to any one of claims 1 to 4,
wherein the second analyzer (1) constructs an abstract syntax tree from the control program, (2) extracts variables for the respective mechanisms from the constructed abstract syntax tree, (3) identifies a dependency relationship between the variables in processing of the control program, based on the constructed abstract syntax tree, and (4) identifies an order relationship between the plurality of mechanisms based on the identified dependency relationship.

8. The process analysis apparatus according to claim 7,
wherein the step (3) for identifying a dependency relationship between the variables in processing of the control program based on the constructed abstract syntax tree includes a step for generating a control flow graph from the constructed abstract syntax tree, and a step for identifying a dependency relationship between the extracted variables based on the generated control flow graph.

9. The process analysis apparatus according to any one of claims 1 to 8,
wherein each piece of the state data is data indicating at least one of torque, speed, acceleration, temperature, current, voltage, air pressure, pressure, flow rate, position, size, and area.

10. The process analysis apparatus according to any one of claims 1 to 9,
wherein the control program is written using at least one of a ladder diagram language, a function block diagram language, a structured text language, an instruction list language, a sequential function chart language, and a C language.

**11.** The process analysis apparatus according to any one of claims 1 to 10,
wherein the first analyzer identifies the connection state between the plurality of mechanisms by statistically analyzing the acquired plurality of pieces of state data.

**12.** The process analysis apparatus according to any one of claims 1 to 11,
the first analyzer identifies, as the connection state, a strength of a relationship between the plurality of mechanisms.

**13.** The process analysis apparatus according to any one of claims 1 to 12, further comprising:

a third acquisition unit configured to acquire mechanism data for at least one of a relative positional relationship between apparatuses included in the respective mechanisms and an order of the apparatuses involved in the process; and
a third analyzer configured to identify a process model indicating an order relationship between the plurality of mechanisms by analyzing the acquired mechanism data, and modelling the process that is carried out on the manufacturing line,
wherein the relationship identifying unit identifies a causal relationship between the plurality of mechanisms in a process that is carried out on the manufacturing line, based on the identified connection state, order relationship, and process model.

**14.** A process analysis method that is executed by a computer, comprising:

acquiring a plurality of pieces of state data related to states of a plurality of mechanisms that constitute a manufacturing line;
acquiring a control program for controlling an operation of the manufacturing line;
analysing the acquired plurality of pieces of state data so as to identify a connection state between the plurality of mechanisms;
analysing the acquired control program so as to identify an order relationship between the plurality of mechanisms; and
identifying a causal relationship between the plurality of mechanisms in a process that is carried out on the manufacturing line, based on the identified connection state and order relationship.

**15.** A process analysis program for causing a computer to execute:

acquiring a plurality of pieces of state data related to states of a plurality of mechanisms that constitute a manufacturing line;
acquiring a control program for controlling an operation of the manufacturing line;
analysing the acquired plurality of pieces of state data so as to identify a connection state between the plurality of mechanisms;
analysing the acquired control program so as to identify an order relationship between the plurality of mechanisms; and
identifying a causal relationship between the plurality of mechanisms in a process that is carried out on the manufacturing line, based on the identified connection state and order relationship.

# FIG. 1

# FIG. 2

# FIG. 3

```
                    PLC                          ~2
  ┌─────────────────────────────────────────┐
  │              ┌──────────────────────────┐│
  │              │      Storage          ~22││
  │ ┌──────────┐ │ ┌──────────────┐          │
  │ │Controller│ │ │ Control      │  ~221    │
  │ │┌────────┐│ │ │ program      │          │
  │ ││  CPU   ││ │ └──────────────┘          │
  │ │└────────┘│ │ ┌──────────────┐          │
21│ │┌────────┐│ │ │ State data   │  ~222    │
  │ ││  RAM   ││ │ └──────────────┘          │
  │ │└────────┘│ │ ┌──────────────┐      3   │
  │ │┌────────┐│ │ │ Log data     │  ~223    │
  │ ││  ROM   ││ │ └──────────────┘          │
  │ │└────────┘│ └──────────────────────────┘│
  │ └──────────┘                             │
  │                              ┌ ─ ─ ─ ─ ─ ┐│
  │ ┌────────────┐ ┌──────────┐  │Manufacturing│
  │ │Communication│ │ Input/   │  │ line       ││
  │ │I/F         │ │ output I/F│──│┌─────────┐ ││
  │ └────────────┘ └──────────┘  ││Mechanisms│ ~31
  └────────────────────────────┘ │└─────────┘ ││
         24           23         └ ─ ─ ─ ─ ─ ┘
```

# FIG. 4

```
┌──────────────────────────────────────────────────────────┐
│               Process analysis apparatus              ~1 │
│     111                    113                           │
│  ┌────────────┐      ┌────────────────┐                  │
│  │First       │      │First analyzer  │    115           │
│  │acquisition │      │                │  ┌──────────────┐│
│  │unit        │─────▶│Intensity of    │  │Relationship  ││
│  │┌──────────┐│      │relationship    │─▶│identifying   ││
│  ││State data││      └────────────────┘  │unit          ││
│  │└──────────┘│                          │              ││
│  └────────────┘                          │Causal        ││
│     222  112              114            │relationship  ││
│  ┌────────────┐      ┌────────────────┐  └──────────────┘│
│  │Second      │      │Second analyzer │      ▲           │
│  │acquisition │      │                │      │           │
│  │unit        │─────▶│Order           │──────┘           │
│  │┌──────────┐│      │relationship    │                  │
│  ││Control   ││      └────────────────┘                  │
│  ││program   ││              ▲                           │
│  │└──────────┘│              │                           │
│  └────────────┘              │                           │
│     221                 ┌──────────┐                     │
│                         │ Log data │ ~223                │
│  ───────────────────────▶│          │                    │
│                         └──────────┘                     │
└──────────────────────────────────────────────────────────┘
```

# FIG. 5

Start

S101 — Acquire plurality of pieces of state data

S102 — Acquire control program

S103 — Analyze state data

S104 — Analyze control program

S105 — Construct directed graph indicating causal relationship between multiple mechanisms

S106 — Output constructed directed graph

End

# FIG. 6

Start processing for analyzing state data

S1301 — Calculate feature amounts from respective pieces of state data

S1302 — Calculate correlation between feature amounts

S1303 — Construct non-directed graph

End processing for analyzing state data

# FIG. 7

State data — 222

2221

|    | F1  | F2  | F3  | F4  |
|----|-----|-----|-----|-----|
| F1 | 1   | ... | ... | ... |
| F2 | ... | 1   | ... | ... |
| F3 | ... | ... | 1   | ... |
| F4 | ... | ... | ... | 1   |

— 2222

2223

# FIG. 8

Tact time

Control signal

Discrete value data

Continuous value data

# FIG. 9

Start processing for analyzing control program

S1401 — Construct abstract syntax tree from control program

S1402 — Extract variables and operators from abstract syntax tree

S1403 — Arrange extracted variables and operators in order, and restrict target variables as monitoring target

S1404 — Randomly execute conditional branches, and initialize ordering of variables

S1405 — Normally operate manufacturing line, and acquire log data indicating execution result

S1406 — Reference log data, and performe ordering of variables

End processing for analyzing control program

# FIG. 10

```
if ( a > 0 ) {
    v1 = a;
} else {
    v2 = -a;
}
```
~221

2211

if statement

Dyadic operation

Assignment statement

Assignment statement

> Variable Constant Variable Variable Variable Monadic operation

a Integer type 0 v1 a v2 — Variable

a

# FIG. 11A

2212

v1 → 0.5 → v3

0.5

v2 → 1 → v3

v3 → 1 → v4

**FIG. 11B**

**FIG. 12**

# FIG. 13A

Marker position
Y axis

Marker position X axis

~551

55

53

531

54

541

522  521  523

51

52

# FIG. 13B

55

54

541

531

53  521  523

51

52

522

## FIG. 13C

## FIG. 14

| Time and data | Marker position X axis | Marker position Y axis | First component position A axis | First component position B axis | Second component position C axis | Second component position D axis |
|---|---|---|---|---|---|---|
| 2016/5/9 17:58:47 | −0.055232 | −0.041424 | −0.06513944 | −0.04784804 | −0.048328 | −0.044876 |
| 2016/5/9 17:59:17 | −0.062136 | −0.024164 | −0.03975383 | −0.04529739 | −0.053506 | −0.027616 |
| 2016/5/9 17:59:46 | −0.067314 | −0.05178 | −0.07414636 | −0.05494461 | −0.056958 | −0.055232 |
| 2016/5/9 18:00:16 | −0.063862 | −0.029342 | −0.07056773 | −0.03644785 | −0.050054 | −0.032794 |
| ⋮ | ⋮ | ⋮ | ⋮ | ⋮ | ⋮ | ⋮ |

# FIG. 15

| | Marker position X axis | Marker position Y axis | First component position A axis | First component position B axis | Second component position C axis | Second component position D axis |
|---|---|---|---|---|---|---|
| Marker position X axis | 1 | 0.1526 | **0.8569** | 0.1492 | **0.9902** | 0.1536 |
| Marker position Y axis | 0.1526 | 1 | 0.1433 | **0.891** | 0.1498 | **0.9941** |
| First component position A axis | **0.8569** | 0.1433 | 1 | 0.124 | **0.8567** | 0.1435 |
| First component position B axis | 0.1492 | **0.891** | 0.124 | 1 | 0.1416 | **0.8874** |
| Second component position C axis | **0.9902** | 0.1498 | **0.8567** | 0.1416 | 1 | 0.1501 |
| Second component position D axis | 0.1536 | **0.9941** | 0.1435 | **0.8874** | 0.1501 | 1 |

# FIG. 16

# FIG. 17

| Mechanism | Corresponding control variable |
|---|---|
| Marker position X axis | base_posi_x |
| Marker position Y axis | base_posi_y |
| First component position A axis | parts1_posi_a |
| First component position B axis | parts1_posi_b |
| Second component position C axis | parts2_posi_c |
| Second component position D axis | parts2_posi_d |

```
IF (axis_x < th_x1) OR (axis_x > th_x2) THEN
    RETURN; // ERROR
ELSE
    base_posi_x := value_x;
END_IF;
```
~561

```
IF (axis_y < th_x1) OR (axis_y > th_x2) THEN
    RETURN; // ERROR
ELSE
    base_posi_y := value_y;
END_IF;
```
~562

```
IF flg = 1 THEN
    RETURN; //ERROR
ELSE
    parts1_posi_a := mount1_a;
    parts1_posi_b := mount1_b;
END_IF;
```
~563

```
IF flg = 1 THEN
    RETURN; //ERROR
ELSE
    parts2_posi_c := mount2_c;
    parts2_posi_d := mount2_d;
END_IF;
```
~564

```
// EOF
```

# FIG. 18A

**FIG. 18B**

**FIG. 18C**

**FIG. 18D**

## FIG. 19

```
Marker position          0.99        First component        0.992      Second
X axis                               position A axis                   component
                                                                       position C axis

    0.01    0.007              0.008      0.011

Marker position          0.993       First component        0.989      Second
Y axis                               position B axis                   component
                                                                       position D axis
```

## FIG. 20

```
Marker position                                                        Second
X axis                                                                 component
                         First component                              position C axis
                         position A axis


                         First component
                         position B axis
Marker position                                                        Second
Y axis                                                                 component
                                                                       position D axis
```

# FIG. 21

```
        Start processing for
        analyzing control program

S1411   Construct abstract syntax tree from
        control program

S1412   Extract variables and operators from
        abstract syntax tree

S1413   Generate control flow graph from
        abstract syntax tree

S1414   Identify dependency relationship between
        variables based on control flow graph

S1415   Identify order relationship between plurality of
        mechanisms based on dependency relationship
        between variables

        End processing for
        analyzing control program
```

# FIG. 22

```
501

L1   X := #10;
L2   Y := #20;
L3   MAX := X;
L4   IF X < Y THEN
L5       MAX := Y;
     END_IF;
L6   OUT := MAX;
```

502

# FIG. 23

Start

S401 — Generate variable groups corresponding to mechanisms by grouping variables

S402 — List up pairs of variable groups

S403 — Removes one pair of variable groups, and list up pairs of variables included in respective variable groups in removed pair

S404 — Remove one pair of variables, and derive dependency relationship between variables in removed pair based on control flow graph

S405 — Is processing complete regarding all pairs of variables?

S406 — Aggregate dependency relationships between variables, and thereby identify dependency relationship between variable groups in removed pair

S407 — Is processing complete regarding all pairs of variable groups?

End

# FIG. 24A

Variable of interest

Global variable that depends on variable of interest

Variable group

| Axis001 | → | wAxis001 |
| | → | ConditionAxis001 |

D(Axis001)

| Axis002 | → | wAxis002 |
| | → | wAxisPos |

D(Axis002)

| Sensor001 | → | SensorSignal |
| | → | JudgeCondition |

D(Sensor001)

# FIG. 24B

Program 001

D(Axis001)    D(Axis002)

← P1

D(Axis001)    D(Sensor001)

← P2

Program 002

Program 003

# FIG. 24C

Axis001 → Axis002 → Axis004

Sensor001 → Axis001

Axis002 → Axis003

Sensor002 → Axis004

# FIG. 25

Process analysis apparatus ~1A

**111** First acquisition unit — State data — 222

**113** First analyzer — Intensity of relationship

**115** Relationship identifying unit — Causal relationship

**112** Second acquisition unit — Control program — 221

**114** Second analyzer — Order relationship

Log data ~223

**116** Third acquisition unit — Mechanism data — 250

**117** Third analyzer — Process model

# FIG. 26

Mechanism data ～250

|    | F1 | F2 | F3 | F4 | F5 |
|----|----|----|----|----|----|
| F1 | 0  | 0  | 0  | 0  | 0  |
| F2 | 0  | 0  | 0  | 0  | 1  |
| F3 | 1  | 1  | 0  | 0  | 0  |
| F4 | 0  | 0  | 1  | 0  | 0  |
| F5 | 0  | 0  | 0  | 0  | 0  |

～251

252

F2 ← F5

F1 → F3 → F4

F2 → F3

Europäisches
Patentamt

European
Patent Office

Office européen
des brevets

# EUROPEAN SEARCH REPORT

Application Number

EP 18 17 1798

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/253232 A1 (PURI COLIN A [US] ET AL) 1 September 2016 (2016-09-01) * paragraph [0018] - paragraph [0019]; figures 2-8 * * paragraph [0024] * * paragraph [0030] - paragraph [0036] * ----- | 1-12,14, 15 | INV. G05B23/02 G05B19/418 |
| A,D | JP 2009 064407 A (OMRON TATEISI ELECTRONICS CO) 26 March 2009 (2009-03-26) * the whole document * ----- | 1-15 | |

TECHNICAL FIELDS
SEARCHED (IPC)

G05B
G06F
B25J

The present search report has been drawn up for all claims

| Place of search | Date of completion of the search | Examiner |
|---|---|---|
| The Hague | 9 October 2018 | Marinica, Raluca |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 17 1798

This annex lists the patent family members relating to the patent documents cited in the above-mentioned European search report.
The members are as contained in the European Patent Office EDP file on
The European Patent Office is in no way liable for these particulars which are merely given for the purpose of information.

09-10-2018

| Patent document cited in search report | | | Publication date | Patent family member(s) | | | Publication date |
|---|---|---|---|---|---|---|---|
| US | 2016253232 | A1 | 01-09-2016 | AU | 2014240239 | A1 | 30-04-2015 |
| | | | | EP | 2863309 | A2 | 22-04-2015 |
| | | | | US | 2015106324 | A1 | 16-04-2015 |
| | | | | US | 2016253232 | A1 | 01-09-2016 |
| JP | 2009064407 | A | 26-03-2009 | JP | 5151556 | B2 | 27-02-2013 |
| | | | | JP | 2009064407 | A | 26-03-2009 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017110153 A
- JP 2018046755 A
- JP 2009064407 A